# EUROPEAN PATENT APPLICATION

(11) **EP 4 559 886 A1**
(43) Date of publication of application: **28.05.2025**
(21) Application number: 23842853.6
(22) Date of filing: 07.07.2023
(51) Int. Cl.: C04B 35/553, C01F 7/54, C04B 38/00, G02B 5/20

(54) **STRUCTURE, INFRARED DETECTION DEVICE, LIGHT-EMITTING DEVICE, AND METHOD FOR PRODUCING STRUCTURE**

(30) Priority: 19.07.2022 JP 2022114679
(71) Applicant: Panasonic Intellectual Property Management Co., Ltd., Kadoma-shi, Osaka 571-0057 (JP)
(72) Inventor: YOSHIOKA, Tatsuro, Kadoma-shi ,Osaka 571-0057 (JP); SATO, Natsuki, Kadoma-shi ,Osaka 571-0057 (JP); KURIZOE, Naoki, Kadoma-shi ,Osaka 571-0057 (JP); SAWA, Ryosuke, Kadoma-shi ,Osaka 571-0057 (JP); SEKINO, Tohru, Kadoma-shi ,Osaka 571-0057 (JP); GOTO, Tomoyo, Kadoma-shi ,Osaka 571-0057 (JP); CHO, Sunghun, Kadoma-shi ,Osaka 571-0057 (JP); SEO, Yeongjun, Kadoma-shi ,Osaka 571-0057 (JP)
(74) Representative: Müller-Boré & Partner Patentanwälte PartG mbB
(86) International application number: PCT/JP2023/025298
(87) International publication number: WO 2024/018928

(57) **Abstract**

Provided is a structure (1), including: a base material (10) that includes a continuous phase (11) of a polycrystalline substance of a complex fluoride including an alkali metal, wherein the structure (1) includes an inorganic substance in an amount of 85% by mass or more, the structure (1) includes the polycrystalline substance of the complex fluoride in an amount of 50% by mass or more, the structure (1) has a porosity of 30% or less, the structure (1) has a median pore size of 500 nm or less, and the structure has a thickness of 10 µm or more.

## Description

### TECHNICAL FIELD

The present invention relates to a structure, an infrared detection device, a light emitting device, and a method for producing the structure.

### BACKGROUND ART

Conventionally, infrared transmission windows using an inorganic fluoride as a base material have been employed for special applications in fields such as academic research and industry, such as window materials for physical and chemical equipment. Patent Literature 1 discloses a Fourier transform infrared spectrophotometer for measuring fluorine gases in samples including corrosive gases, provided with a measuring cell having a cell window made from one selected from the group consisting of CaF₂, BaF₂, MgF₂, LiF, and ZnSe.

### CITATION LIST

### PATENT LITERATURE

Patent Literature 1: WO 2019/176624

### SUMMARY OF INVENTION

In contrast, a technique for sensing various gases and flames using an infrared detection element and an optical filter for infrared transmission is known. However, alkali metal fluorides described above have strong hygroscopicity and may not be suitable for general applications such as gas sensors and flame detection sensors. In addition, since alkali earth metal fluorides have a high melting point of 1,200°C to 1,500°C, a structure having a high infrared transmittance may not be produced without using an advanced production technique requiring a high temperature of at least about 1,000°C.

The present invention has been made in consideration of the above issues, which are inherent in the related art. An object of the present invention is to provide a structure suitable for an application as an infrared transmission window for a gas sensor, a flame detection sensor, or the like, and to provide an infrared detection device using the structure. An object of the present invention is to provide a method for producing the structure, which can be produced through a simple low-temperature process.

In response to the above issues, a structure according to a first aspect of the present invention includes a base material that includes a continuous phase of a polycrystalline substance of a complex fluoride including an alkali metal. The structure includes an inorganic substance in an amount of 85% by mass or more, the structure includes the polycrystalline substance of the complex fluoride in an amount of 50% by mass or more, the structure has a porosity of 30% or less, the structure has a median pore size of 500 nm or less, and the structure has a thickness of 10 µm or more.

An infrared detection device according to a second aspect of the present invention includes a structure.

A light emitting device according to a third aspect of the present invention includes a structure.

A method for producing a structure according to a fourth aspect of the present invention includes: pressurizing and heating a raw material that includes at least one of: a first fluoride including an alkali metal, a second fluoride including a metal different from the alkali metal, and water; or a complex fluoride including at least one of a hydroxyl group or a water molecule; under conditions that a pressure is within a range from 10 to 600 MPa, and a temperature is within a range from 50°C to 300°C. The structure includes an inorganic substance in an amount of 85% by mass or more, the structure includes the polycrystalline substance of the complex fluoride in an amount of 50% by mass or more, the structure has a porosity of 30% or less, the structure has a median pore size of 500 nm or less, and the structure has a thickness of 10 µm or more.

### BRIEF DESCRIPTION OF DRAWINGS

[Fig. 1] Fig. 1 is a cross-sectional view schematically illustrating an example of a structure according to the present embodiment.
[Fig. 2] Fig. 2 is an enlarged cross-sectional view schematically illustrating another example of the structure according to the present embodiment.
[Fig. 3] Fig. 3 is a cross-sectional view schematically illustrating an example of an infrared detection device according to the present embodiment.
[Fig. 4] Fig. 4 is a schematic view illustrating an example of a light emitting device according to the present embodiment.
[Fig. 5] Fig. 5 is a SEM image of Na₃AlF₆ powder obtained through synthesis, observed at a magnification of 10,000.
[Fig. 6] Fig. 6 is a SEM image of K₂NaAlF₆ powder obtained through synthesis, observed at a magnification of 10,000.
[Fig. 7] Fig. 7 is a SEM image of NaMgF₃ powder obtained through synthesis, observed at a magnification of 10,000.
[Fig. 8] Fig. 8 is an XRD pattern of powder of a test sample according to example 1.
[Fig. 9] Fig. 9 is an XRD pattern of powder of a test sample according to example 2.
[Fig. 10] Fig. 10 includes XRD patterns of a raw material and powder of a test sample according to example 3.
[Fig. 11] Fig. 11 includes XRD patterns of a raw material and powder of a test sample according to example 4.
[Fig. 12] Fig. 12 includes XRD patterns of a raw material and powder of a test sample according to example 5.
[Fig. 13] Fig. 13 is a secondary electron image of a CP processed (cross section polisher processed) cross section of the test sample according to example 1 observed at a magnification of 10,000.
[Fig. 14] Fig. 14 is a reflected electron image of the CP processed cross section of the test sample according to example 1 observed at a magnification of 10,000.
[Fig. 15] Fig. 15 is a secondary electron image of a CP processed cross section of the test sample according to example 2 observed at a magnification of 10,000.
[Fig. 16] Fig. 16 is a reflected electron image of the CP processed cross section of the test sample according to example 2 observed at a magnification of 10,000.
[Fig. 17] Fig. 17 is a secondary electron image of a CP processed cross section of the test sample according to example 3 observed at a magnification of 10,000.
[Fig. 18] Fig. 18 is a reflected electron image of the CP processed cross section of the test sample according to example 3 observed at a magnification of 10,000.
[Fig. 19] Fig. 19 is a secondary electron image of a CP processed cross section of the test sample according to example 4 observed at a magnification of 10,000.
[Fig. 20] Fig. 20 is a reflected electron image of the CP processed cross section of the test sample according to example 4 observed at a magnification of 10,000.
[Fig. 21] Fig. 21 is a secondary electron image of a CP processed cross section of the test sample according to example 5 observed at a magnification of 10,000.
[Fig. 22] Fig. 22 is a reflected electron image of the CP processed cross section of the test sample according to example 5 observed at a magnification of 10,000.
[Fig. 23] Fig. 23 is a secondary electron image of a CP processed cross section of the test sample according to example 1 observed at a magnification of 2,000.
[Fig. 24] Fig. 24 is a reflected electron image of the CP processed cross section of the test sample according to example 1 observed at a magnification of 2,000.
[Fig. 25] Fig. 25 is a secondary electron image of a CP processed cross section of a test sample according to comparative example 1 observed at a magnification of 2,000.
[Fig. 26] Fig. 26 is a reflected electron image of the CP processed cross section of the test sample according to comparative example 1 observed at a magnification of 2,000.
[Fig. 27] Fig. 27 is a secondary electron image of a CP processed cross section of the test sample according to example 3 observed at a magnification of 2,000.
[Fig. 28] Fig. 28 is a reflected electron image of the CP processed cross section of the test sample according to example 3 observed at a magnification of 2,000.
[Fig. 29] Fig. 29 is a secondary electron image of a CP processed cross section of the test sample according to comparative example 2 observed at a magnification of 2,000.
[Fig. 30] Fig. 30 is a reflected electron image of the CP processed cross section of the test sample according to comparative example 2 observed at a magnification of 2,000.
[Fig. 31] Fig. 31 includes infrared spectra obtained by measuring the test samples according to examples 1 and 2 using a transmission method.
[Fig. 32] Fig. 32 includes infrared spectra obtained by measuring the test samples according to examples 3, 4, and 5 using a transmission method.
[Fig. 33] Fig. 33 includes infrared spectra obtained by measuring the test samples according to comparative examples 1 and 2 using a transmission method.
[Fig. 34] Fig. 34 is a secondary electron image of a cut surface of a test sample according to example 6 observed at a magnification of 10,000.
[Fig. 35] Fig. 35 is a secondary electron image of a cut surface of the test sample according to example 6 observed at a magnification of 2,000.
[Fig. 36] Fig. 36 is a secondary electron image of a cut surface of a test sample according to comparative example 3 observed at a magnification of 10,000.
[Fig. 37] Fig. 37 is a secondary electron image of a cut surface of the test sample according to comparative example 3 observed at a magnification of 2,000.
[Fig. 38] Fig. 38 is a secondary electron image of a cut surface of a test sample according to example 7 observed at a magnification of 10,000.
[Fig. 39] Fig. 39 is a secondary electron image of a cut surface of the test sample according to example 7 observed at a magnification of 2,000.
[Fig. 40] Fig. 40 is a secondary electron image of a cut surface of a test sample according to comparative example 4 observed at a magnification of 10,000.
[Fig. 41] Fig. 41 is a secondary electron image of a cut surface of the test sample according to comparative example 4 observed at a magnification of 2,000.
[Fig. 42] Fig. 42 is a SEM image of Na₃AlF₆ powder obtained in example 8.
[Fig. 43] Fig. 43 is a SEM image of Na₃AlF₆ powder obtained through heat treatment at 300°C in example 9.
[Fig. 44] Fig. 44 is a SEM image of Na₃AlF₆ powder obtained through heat treatment at 400°C in example 10.
[Fig. 45] Fig. 45 is a SEM image of Na₃AlF₆ powder obtained through heat treatment at 500°C in example 11.
[Fig. 46] Fig. 46 includes XRD patterns of Na₃AlF₆ powder obtained in examples.
[Fig. 47] Fig. 47 is a secondary electron image of a structure formed from the Na₃AlF₆ powder of example 9.
[Fig. 48] Fig. 48 is a reflected electron image of the structure formed from the Na₃AlF₆ powder of example 9.
[Fig. 49] Fig. 49 is a secondary electron image of a structure formed from the Na₃AlF₆ powder of example 10.
[Fig. 50] Fig. 50 is a reflected electron image of the structure formed from the Na₃AlF₆ powder of example 10.
[Fig. 51] Fig. 51 is a secondary electron image of a structure formed from the Na₃AlF₆ powder of example 11.
[Fig. 52] Fig. 52 is a reflected electron image of the structure formed from the Na₃AlF₆ powder of example 11.
[Fig. 53] Fig. 53 is a graph comparing linear transmittances of structures obtained in examples.
[Fig. 54] Fig. 54 is a graph illustrating a relationship between heat treatment temperature and relative density.
[Fig. 55] Fig. 55 is a graph illustrating a relationship between heat treatment temperature and linear transmittance.
[Fig. 56] Fig. 56 includes TG curves obtained through thermogravimetry for examples 8 and 10.
[Fig. 57] Fig. 57 is a graph illustrating a relationship between a first weight loss percentage and a second weight loss percentage.

### DESCRIPTION OF EMBODIMENTS

Referring to the drawings, a detailed description is given below of a structure, an infrared detection device, a light emitting device, and a method for producing the structure according to the present embodiment. Note that dimensional ratios in the drawings are exaggerated for convenience of the description and are sometimes different from actual ratios.

### [Structure]

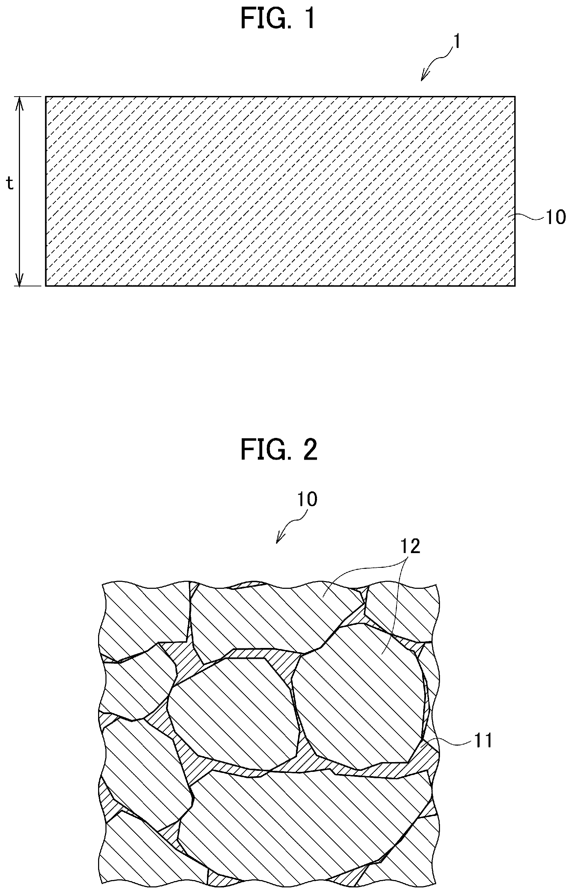

As illustrated in Fig. 1, a structure 1 according to the present embodiment includes a base material 10. The base material 10 includes a continuous phase 11 of a polycrystalline substance of a complex fluoride. The structure 1 according to the present embodiment is a ceramic structure.

The complex fluoride includes an alkali metal. The complex fluoride may include, for example, at least one alkali metal selected from the group consisting of lithium, sodium, potassium, rubidium, and cesium. Alkali metal fluorides have high solubility in water, but complex fluorides including alkali metals have low solubility in water. The solubility of alkali metal fluorides in 100 g of water at 25°C is, for example, 0.134 g of LiF, 4.13 g of NaF, 102 g of KF, 300 g of RbF, and 573 g of CsF. In contrast, the solubility of complex fluorides including alkali metals in 100 g of water at 25°C is, for example, 0.042 g of Na₃AlF₆ and 0.025 g of NaMgF₃.

The complex fluoride may include, as main components, fluorine, an alkali metal, and at least one additional metal selected from the group consisting of an alkaline earth metal, aluminum, gallium, indium, zinc, and yttrium. The additional metal may specifically include at least one metal selected from the group consisting of magnesium, calcium, strontium, barium, aluminum, gallium, indium, zinc, and yttrium. Since the complex fluoride has low refractive index anisotropy, transmission of infrared light can be improved. The structure 1 can be easily formed with an inorganic substance including a metal element described above using a pressure heating method, as described below. Note that main components here mean that the total content of fluorine, an alkali metal, and an additional metal, included in the complex fluoride, is 80% or more by molar ratio. The total content may be 85% or more, 90% or more, 95% or more, or 100%.

Specifically, the complex fluoride may include at least one of A₃AlF₆ or ABF₃ (in the above composition formulas, A represents one or more alkali metals, and B represents one or more alkaline earth metals). A₃AlF₆ may include, for example, at least one selected from the group consisting of Li₃AlF₆, Li₂NaAlF₆, Li₂KAlF₆, Na₃AlF₆, Na₂LiAlF₆, Na₂KAlF₆, K₃AlF₆, K₂LiAlF₆, and K₂NaAlF₆. ABF₃ may include, for example, at least one selected from the group consisting of LiMgF₃, NaMgF₃, KMgF₃, LiCaF₃, NaCaF₃, and KCaF₃. More specifically, the complex fluoride may include at least one selected from the group consisting of Na₃AlF₆, K₂NaAlF₆, and NaMgF₃. Both Na₃AlF₆ and K₂NaAlF₆ have a cryolite-type crystal structure, and NaMgF₃ has a perovskite-type crystal structure, which are preferable from the viewpoint of infrared transmission because they are materials having low refractive index anisotropy due to crystal orientation.

The complex fluoride may include fluorine, an alkali metal, and aluminum, as main components. Note that main components as used here means that the total content of fluorine, an alkali metal, and aluminum, included in the complex fluoride, is 80% or more by molar ratio. The above total content may be 85% or more, 90% or more, 95% or more, or 100%. The complex fluoride may include, for example, sodium hexafluoroaluminate (Na₃AlF₆). Na₃AlF₆ is also known as a component of cryolite. The refractive index anisotropy of Na₃AlF₆ is low. Thus, it has excellent transmission of infrared light.

A part of a constituent anion of the complex fluoride may be substituted by a hydroxide ion or an oxide ion. For example, in a case of complex fluoride particles synthesized in liquid phase, a part of complex fluoride ions may be substituted by at least one of hydroxide ions or oxide ions. When the complex fluoride has a hydroxyl group, the hydroxyl group absorbs infrared light of a specific wavelength. Thus, when the structure 1 is used as a sensor, for example, sensor sensitivity can be improved by cutting unnecessary wavelengths. When the structure 1 includes a hydroxyl group, transmittance fluctuation due to humidity is reduced, and the sensor is less affected by humidity.

The structure 1 includes an inorganic substance in an amount of 85% by mass or more. Thus, as compared with a case where a resin is used, the structure 1 can be obtained being unlikely to deteriorate with the passage of time and having high transmission of infrared rays. Note that the inorganic substance includes the above-described complex fluoride. The structure 1 may include an inorganic substance in an amount of 90% by mass or more, or 95% by mass or more. The structure 1 may include an inorganic substance in an amount of 100% by mass or less.

The complex fluoride is a polycrystalline substance. Since the complex fluoride is a polycrystalline substance, it is excellent from the viewpoint of gas barrier properties or durability. The structure 1 may include the polycrystalline substance of the complex fluoride in an amount of 50% by mass or more. In this case, the obtained structure 1 can easily utilize properties of the complex fluoride. By including the complex fluoride in an amount of 50% by mass or more, the structure has higher moisture resistance than by including an alkali metal fluoride. In addition, since a ratio of a part having a different refractive index in the structure 1 is reduced due to a high mass ratio of the complex fluoride, light scattering is reduced, and infrared transmittance of the structure 1 can be increased. In the structure 1, the mass ratio of the complex fluoride may be 60% or more, 70% or more, 80% or more, 90% or more, or 95% or more.

As illustrated in Fig. 2, the base material 10 may include a continuous phase 11 and multiple complex fluoride particles 12. The continuous phase 11 may be present between adjacent complex fluoride particles 12. The continuous phase 11 may bond each of the multiple complex fluoride particles 12 together. The continuous phase 11 may be in direct contact with multiple complex fluoride particles 12. The continuous phase 11 may cover at least part of the surface of each of the multiple complex fluoride particles 12, or may cover the entire surface of each of the multiple complex fluoride particles 12. The multiple complex fluoride particles 12 may be bonded to one another. The multiple complex fluoride particles 12 may be in point contact with each other, or may be in surface contact where surfaces of the multiple complex fluoride particles 12 are in contact with each other.

The multiple complex fluoride particles 12 may be made from a similar substance as the complex fluoride making up the continuous phase 11 as described above. An inorganic substance making up the multiple complex fluoride particles 12 may be crystalline or amorphous. The inorganic substance making up the multiple complex fluoride particles 12 is preferably crystalline from the viewpoint of gas barrier properties or durability. The inorganic substance making up the multiple complex fluoride particles 12 is preferably amorphous from the viewpoint of light transmittance. Note that in a case of being crystalline, the complex fluoride particles 12 may be single crystal or polycrystalline.

The average particle size of the multiple complex fluoride particles 12 is preferably 10 nm or more, and 50 µm or less. When the average particle size of the complex fluoride particles 12 is 50 µm or less, the light transmittance of the structure 1 is increased. When the average particle size of the complex fluoride particles 12 is within this range, the complex fluoride particles 12 strongly bond to each other, and thus the strength of the structure 1 can be increased. When the average particle size of the complex fluoride particles 12 is within this range, the percentage of pores present in the structure 1 is 30% or less, as will be described below. In addition, the size of pores generated between the complex fluoride particles 12 is reduced. Thus, the strength of the structure 1 can be increased. From the viewpoint of improving the light transmittance of the structure 1, the average particle size of the multiple complex fluoride particles 12 is more preferably 10 µm or less, even more preferably 2 µm or less, particularly preferably 1 µm or less, and most preferably 500 nm or less. The average particle size of the multiple complex fluoride particles 12 may be, for example, 1 nm or more, or 10 nm or more. Note that in this description, the value of "average particle size" is, unless otherwise stated, a value calculated as an average value of particle size of particles observed in several to several tens of visual fields by using observation means, such as a scanning electron microscope (SEM) or a transmission electron microscope (TEM).

The structure 1 may include an impurity generated during production. The impurity is, for example, a raw material for forming a complex fluoride, and may include an element making up the complex fluoride. The element included in the impurity may include, for example, at least one element selected from the group consisting of fluorine, an alkali metal, and an additional metal described above. The impurity may include a chalcogen compound including an oxide made from one type of metal element, a halide, a hydroxide, a nitride, or a carbide. The impurity may be crystalline or amorphous.

A refractive index difference between the above-described complex fluoride and the impurity may be 0.1 or less. When the refractive index difference is 0.1 or less, a structure can have a high transmittance by reducing light scattering. The lower limit of the refractive index difference is not particularly limited. The refractive index difference may be 0.08 or less, or 0.04 or less.

The structure 1 may include an organic material, such as resin particles. As will be described below, since the structure 1 can be obtained by pressurizing while heating at a temperature of 100°C to 300°C, a member having low heat resistance can be added to the structure 1. The member is not limited to one having low heat resistance, such as an organic material, and the structure 1 may include an inorganic compound other than the complex fluoride and the impurity in order to impart functionality.

The porosity in a cross section of the structure 1 is 30% or less. That is, the porosity of pores that exceed 0 nm in the cross section of the structure 1 is 30% or less. Specifically, when the cross section of the structure 1 is observed, an average value of the percentage of pores per unit area is 30% or less. When the porosity is 30% or less, pores in a matrix portion are reduced, and a solidified body having high strength can be obtained. Note that the porosity in the cross section of the structure 1 is preferably 20% or less, more preferably 10% or less, and even more preferably 5% or less. The lower that the porosity is in the cross section of the inorganic structure 1, the less that cracks originate from pores, and it becomes possible to increase the strength of the inorganic structure 1. Further, the lower that the porosity is in the cross section of the inorganic structure 1, the less that light scatters due to pores, and it becomes possible to increase the transmittance of the structure 1.

In this description, the porosity can be determined as follows. First, a cross section of the structure 1 is observed to distinguish between pores and parts other than pores. Then, the area of pores per unit area is measured to obtain the percentage of pores per unit area. The porosity is an average value of the percentage of pores per unit area determined at multiple points. When a cross section of the structure 1 is observed, an optical microscope, a scanning electron microscope (SEM), or a transmission electron microscope (TEM) can be used. The unit area and the area of pores in that unit area may be measured by binarizing an image observed using a microscope.

The median pore size of the structure 1 is 500 nm or less. When the median pore size is 500 nm or less, the structure 1 has a high transmittance because scattering of light due to pores is reduced. The median pore size is preferably 300 nm or less, more preferably 200 nm or less, and even more preferably 100 nm or less. Note that in this description, the median pore size means a pore size when the cumulative value of the pore size distribution on the area basis is 50%. The pore size means the diameter of a perfect circle when the shape of pores in the cross section of the structure 1 is assumed to be a perfect circle.

The area percentage of pores having a pore size exceeding 500 nm in the cross section of the structure 1 is preferably 1% or less per unit area. In such a case, since scattering of light due to pores is reduced, the structure has a higher transmittance. The above area percentage is more preferably 0.5% or less, even more preferably 0.1% or less, and particularly preferably 0.0%. Note that the above area percentage of 0.0% means that no pores having the median pore size exceeding 500 nm per unit area are observed.

The structure 1 has transmission of infrared light. In a target wavelength band, linear transmittance of the structure 1 may have a wavelength bandwidth equal to or greater than a predetermined value. The linear transmittance of the structure 1 can be obtained by measuring using a transmission method with an FT-IR (Fourier transform infrared spectroscopy) device. The linear transmittance of an infrared transmission spectrum is converted according to the Lambert-Beer law to be a linear transmittance at a thickness of 1 mm. The wavelength bandwidth can be obtained by measuring the wavelength bandwidth where the linear transmittance is equal to or greater than a predetermined value in the target wavelength band. The wavelength bandwidth may be a wavelength bandwidth where the linear transmittance is continuously equal to or greater than a predetermined value, or the total of wavelength bandwidths where the linear transmittance is continuously or intermittently equal to or greater than a predetermined value. That is, the wavelength bandwidth is the total of wavelength bandwidths where the linear transmittance is equal to or greater than a predetermined value in the target wavelength band. Thus, when the linear transmittance is intermittently equal to or greater than the predetermined value, wavelength bands where the linear transmittance is equal to or greater than the predetermined value may be separated from each other in the target wavelength band. Note that the wavelength bandwidth is preferably a wavelength bandwidth where the linear transmittance is continuously equal to or greater than the predetermined value.

In a target wavelength band of 3 µm or more and 10 µm or less, a wavelength bandwidth where a linear transmittance per 1 mm thickness of the structure 1 continuously exceeds 10% may be 0.1 µm or more. Such a structure 1 can be expected to be used as an optical filter for infrared transmission. Note that the target wavelength band may be 8 µm or less, or 6 µm or less. A wavelength bandwidth where the linear transmittance exceeds 10% may be 0.5 µm or more, 1 µm or more, 1.5 µm or more, or 2 µm or more. The wavelength bandwidth where the linear transmittance exceeds 10% may be 3 µm or less. The linear transmittance in the above wavelength bandwidth may exceed 20%, 30%, 40%, 50%, or 60%. For example, a wavelength bandwidth where the linear transmittance continuously exceeds 50% in a target wavelength band of 3 µm or more and 5 µm or less may be 0.1 µm or more. The upper limit of the linear transmittance in the above wavelength bandwidth is not particularly limited and is 100%, for example.

At a wavelength of 4 µm, the linear transmittance per 1 mm thickness of the structure 1 may exceed 20%, 30%, 40%, 50%, or 60%. Within a wavelength range from 3.8 µm to 4.4 µm, an average value of the linear transmittance per 1 mm thickness of the structure 1 may be 60% or more, or 65% or more.

At a wavelength from 3.8 to 4.4 µm, an average value of the linear transmittance per 1 mm thickness of the structure 1 may exceed 20%, 30%, 40%, 50%, or 60%. In the whole wavelength range from 3.8 to 4.4 µm, the average value of the linear transmittance per 1 mm thickness of the structure 1 may exceed 20%, 30%, 40%, 50%, or 60%.

When the structure 1 is heated from 200°C to 500°C, a weight loss percentage may be 0.5% or less. Such a structure 1 has a small amount of hydroxyl groups and water molecules inside, and can control infrared absorption and scattering due to hydroxyl groups and water molecules. Thus, infrared transmission can be further increased. The weight loss percentage may be 0.4 or less, or 0.3 or less. The weight loss percentage may be 0% or more.

The weight loss percentage can be measured using TG (thermogravimetry) in accordance with JIS K7120-1987. When heating from 200°C to 500°C is performed, the weight loss percentage can be calculated using formula (1) below.

Weight loss percentage (%) = (((mass of complex fluoride particles at 200°C) - (mass of complex fluoride particles at 500°C)) / (mass of complex fluoride particles at 200°C)) × 100 (1)

The structure 1 may be an infrared transmission filter. By using the structure 1 as an infrared transmission filter, it is possible to provide an infrared detection device and a light emitting device which can reduce diffuse reflection of infrared light due to pores. When the structure 1 is a single layer and can transmit light in a specific infrared region, it is possible to transmit specific infrared light without stacking multiple dielectrics or separately providing a light shielding filter for improving sensor sensitivity, such as in an interference filter.

A thickness t of the structure 1 is 10 µm or more. The structure 1 of the present embodiment is formed using a pressure heating method, as will be described below. Thus, without forming the structure 1 by stacking thin films, a bulk body having a thickness of 10 µm or more can be easily formed. Note that the thickness of the structure 1 may be 100 µm or more, 500 µm or more, 1 mm or more, or 1 cm or more. The upper limit of the thickness of the structure 1 is not particularly limited and may be, for example, 50 cm.

When the structure 1 is used as an infrared transmission filter, its shape is not particularly limited. The shape may be a flat plate shape, a concave lens shape, or a convex lens shape. When the lens shape is provided, it becomes possible to make a light ray perpendicularly enter a dielectric stacked bandpass filter, and thus to cancel dependence on the incident angle of the light ray of the dielectric stacked bandpass filter. Further, a fine structure having an anti-reflection function may be formed on the surface of the structure 1.

As described above, the structure 1 includes the base material 10 that includes the continuous phase 11 of a polycrystalline substance of a complex fluoride including an alkali metal. The structure 1 includes an inorganic substance in an amount of 85% by mass or more, and the structure 1 includes a polycrystalline substance of a complex fluoride in an amount of 50% by mass or more. The porosity of the structure 1 is 30% or less, the median pore size of the structure 1 is 500 nm or less, and the thickness of the structure 1 is 10 µm or more.

With this configuration, the structure is unlikely to dissolve in water, and the structure can be produced through a simple low-temperature process. Thus, the structure is suitable for applications such as infrared transmission windows for gas sensors and flame detection sensors.

### Infrared detection device

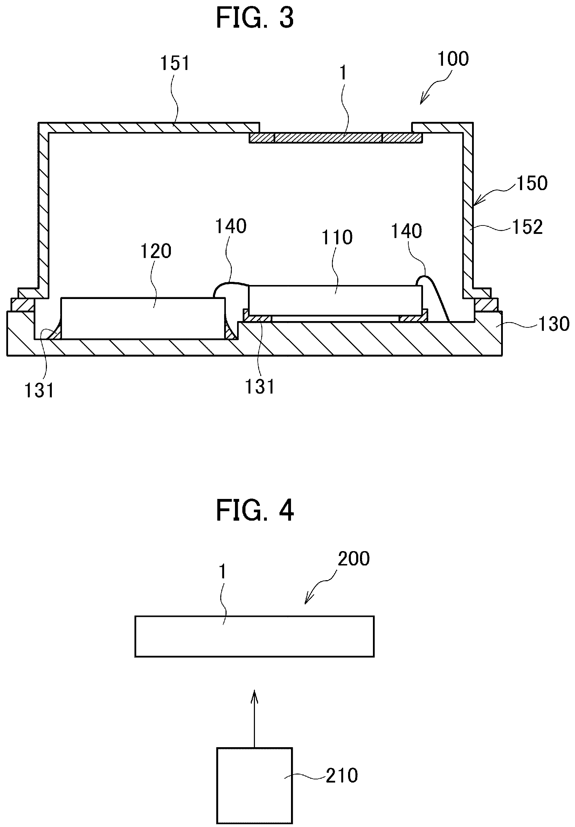

Next, an infrared detection device 100 according to the present embodiment will be described with reference to Fig. 3. As illustrated in Fig. 3, the infrared detection device 100 includes the structure 1 described above. The infrared detection device 100 also includes an infrared detection element 110, an IC element 120, a substrate 130, and a metal case 150.

The infrared detection element 110 and the IC element 120 are mounted on the substrate 130 using a die bond material 131. The infrared detection element 110 and the IC element 120 are electrically connected to each other by a wire 140. The infrared detection element 110 is connected to an electric circuit wiring (not illustrated) of the substrate 130 by a wire 140.

The infrared detection element 110 receives infrared rays, converts thermal energy of the received infrared rays into electric energy, and outputs an electric signal in accordance with the amount of the received infrared rays to the IC element 120. The infrared detection element 110 can be a pyroelectric element, a thermal infrared detection element, such as a thermopile type infrared detection element or a bolometer type infrared detection element, or a quantum infrared detection element.

The IC element 120 includes an amplifying circuit for amplifying an electric signal output from the infrared detection element 110, and a judging circuit for judging that a flame is present when the electric signal amplified by the amplifying circuit exceeds a threshold value.

The metal case 150 is attached to the substrate 130. The metal case 150 surrounds the infrared detection element 110 and the IC element 120, and the infrared detection element 110 and the IC element 120 are sealed by the substrate 130 and the metal case 150. The metal case 150 includes an upper wall 151 and a side wall 152. The upper wall 151 is provided with an opening, and the opening is covered by the structure 1. The structure 1 is arranged to face the infrared detection element 110, and the infrared detection element 110 is provided on the substrate 130 so as to receive infrared rays passing through the structure 1. The side wall 152 connects the edge of the upper wall 151 and the edge of the substrate 130.

Infrared rays emitted from a flame or the like pass through the structure 1 and are received by the infrared detection element 110. The infrared detection element 110 outputs an electric signal in accordance with the amount of received infrared rays to the IC element 120. The IC element 120 determines, according to the electric signal, whether a flame is present. In this way, the infrared detection device 100 can detect a flame using infrared rays emitted from the flame.

Note that gas molecules of inorganic gases and the like, such as SO₂, CO₂, PH₃, N₂O, and NO, have absorption properties that are characteristic in a mid-infrared region. These gas molecules emit infrared rays in accordance with high temperatures. Thus, the structure 1 according to the present embodiment can also be used as a sensor not only for CO₂, but also for gases having absorption properties that are characteristic in the infrared region. More specifically, the structure 1 according to the present embodiment is useful as an infrared transmission window because of its high transmittance of infrared rays.

Note that in the present embodiment, an example of using the infrared detection device 100 as a flame sensor for detecting a flame has been described, but the use of the infrared detection device 100 is not limited to such an embodiment. The infrared detection device 100 can also be used as a human sensor, a biological sensor, a crime prevention sensor, a gas sensor, a non-contact thermometer, a solid-state imaging device, a camera module, and the like.

### Light emitting device

Next, a light emitting device 200 according to the present embodiment will be described with reference to Fig. 4. As illustrated in Fig. 4, the light emitting device 200 includes the structure 1 described above. The light emitting device 200 also includes a light source 210 for irradiating the structure 1 with light including infrared rays. The light source 210 may include an LED, a xenon lamp, a laser diode, or a combination thereof.

Since the light emitting device 200 includes the structure 1, part of the infrared rays emitted from the light source 210 can be cut out by the structure 1. Thus, the light emitting device 200 according to the present embodiment can emit light having a specific wavelength. The light emitting device 200 can be used, for example, for a light emitting device for gas detection, a light emitting device for inspection, a light emitting device for monitoring camera, a light emitting device for hair removal, a light emitting device for curing infrared curable resin, and the like.

### Method for producing structure

### First embodiment

Next, a method for producing the structure 1 according to a first embodiment will be described. The structure 1 can be produced by pressurizing and heating a raw material including complex fluoride particles. By using such a pressure heating method, complex fluoride particles are bonded to each other while being deformed, and thus the structure 1 having a small porosity can be formed. For raw materials including fluoride particles, there may be a step of generating multiple complex fluoride particles, a step of separating the multiple complex fluoride particles, a step of heating the multiple complex fluoride particles, and a step of hydrating the multiple complex fluoride particles.

Specifically, in the step of generating multiple complex fluoride particles, first, a first metal compound which is an alkali metal fluoride, and a second metal compound different from a fluoride, are mixed and reacted to prepare complex fluoride particles. The mixing method of the alkali metal fluoride and the second metal compound is not particularly limited, and may be either dry mixing or wet mixing. Adding a second metal compound solution to an alkali metal fluoride solution, or adding the alkali metal fluoride solution to the second metal compound solution, causes these solutions to mix. Further, the two solutions may be mixed at the same time in equal amounts by using a microchannel or the like. As a solvent, for example, water can be used.

The concentration when the alkali metal fluoride and the second metal compound are mixed may be adjusted appropriately. The concentration of the alkali metal fluoride may be 100 mM or more, or 200 mM or more. The concentration of the alkali metal fluoride may be 1,000 mM or less. The concentration of the second metal compound may be 20 mM or more, or 40 mM or more. The concentration of the second metal compound may be 200 mM or less. The higher the raw material concentration, the smaller the particle size tends to become, and thus the transmission of the structure 1 can be improved.

Examples of the alkali metal included in the alkali metal fluoride include lithium, sodium, potassium, rubidium, and cesium. Specifically, the alkali metal fluoride may include at least one alkali metal selected from the group consisting of lithium fluoride, sodium fluoride, potassium fluoride, rubidium fluoride, and cesium fluoride.

The second metal compound is at least one selected from the group consisting of a metal chloride, a metal nitrate, a metal sulfate, and a metal organic acid salt, and may include a metal salt excluding metal fluorides. The metal included in the second metal compound may be at least one selected from the group consisting of an alkaline earth metal, aluminum, gallium, indium, zinc, and yttrium. The second metal compound may include, for example, aluminum chloride.

In the separation step, multiple complex fluoride particles generated are separated. When the second metal compound is a metal chloride, a metal nitrate, a metal sulfate, or a metal organic acid salt, an alkali metal chloride, a nitrate, a sulfate, or a metal organic acid salt is formed as a by-product in addition to the complex fluoride when the alkali metal fluoride and the second metal compound are mixed. Thus, a washing operation may be performed to remove the by-product. The alkali metal compound may be removed, for example, by washing with a solvent, such as water, during filtration or centrifugation.

In the heating step, separated multiple complex fluoride particles are heated at 200°C or higher. By setting the heating temperature at 200°C or higher, the water content inside the complex fluoride particles is reduced. Consequently, absorption of infrared light by hydroxyl groups and water inside the structure 1 is reduced, and transmittance of the structure 1 can be increased. The heating temperature of the complex fluoride particles may be 300°C or more, 350°C or more, 400°C or more, 450°C or more, or 500°C or more. The heating temperature of the complex fluoride particles may be 900°C or less, 800°C or less, 700°C or less, 600°C or less, or 550°C or less. The heating time of the complex fluoride particles may be 0.5 hours or more, 1 hour or more, or 1.5 hours or more. The heating time of the complex fluoride particles may be 24 hours or less, 12 hours or less, 6 hours or less, or 3 hours or less.

In the method for producing a complex fluoride powder, if necessary, after separating complex fluoride particles by removing the by-product, the particles may be dried. The drying temperature is not particularly limited, and drying can be performed at a temperature lower than the melting point of the complex fluoride. The drying temperature may be, for example, 40°C or more, 80°C or more, 100°C or more, or 200°C or more. The drying temperature may be, for example, 600°C or less, 400°C or less, 300°C or less, or 200°C or less. The drying time of the complex fluoride particles may be 0.5 hours or more, 1 hour or more, or 1.5 hours or more. The drying time of the complex fluoride particles may be 24 hours or less, 12 hours or less, 6 hours or less, or 3 hours or less.

The raw material may include hydrated water in addition to the complex fluoride. The raw material may also include a by-product, such as a simple fluoride including a single metal element, an oxide, or a hydroxide, as an unavoidable impurity.

Next, the raw material including the complex fluoride particles is filled inside a die. After the raw material is filled into the die, the die may be heated as necessary. Then, by applying pressure to the raw material inside the die, the inside of the die enters a high pressure state. At this time, the complex fluoride particles are densified, and at the same time, the complex fluoride particles are bonded to each other.

Heating and pressurizing conditions are not particularly limited, as long as the conditions are such that densification of complex fluoride particles progresses. For example, it is preferable that the raw material be heated at a temperature of 50°C to 300°C and then pressurized at a pressure of 10 to 600 MPa. Note that the temperature when the raw material is heated is more preferably within a range from 80°C to 250°C, and even more preferably from 100°C to 200°C. The pressure when the raw material is pressurized is more preferably within a range from 50 to 600 MPa.

The structure 1 can be obtained by taking out a molded body from the inside of the die. It is thought that by pressurizing a raw material including complex fluoride particles including at least one of a hydroxyl group or a water molecule, while heating, the complex fluoride particles react with each other through the hydroxyl group or the water molecule to form the continuous phase 11 of a polycrystalline substance of a complex fluoride including an alkali metal. Thus, the structure 1 described above can be formed.

The structure 1 having a dense structure can be obtained through the reaction due to pressurizing and heating as described above. Further, as a method for forming an aggregate of inorganic particles, pressing only powder of inorganic particles to form a compact and then sintering it at a high temperature (for example, 1,700°C or higher) has also been considered. However, even if the compact of inorganic particles is sintered at a high temperature, the structure 1 to be obtained has many pores, which causes not only insufficient mechanical strength but also insufficient transmittance due to light scattering. In addition, when the inorganic particles are sintered at a high temperature, precise temperature control is required, which increases production cost.

In contrast, in the production method of the present embodiment, since the raw material including complex fluoride particles that include at least one of a hydroxyl group or a water molecule is pressurized while being heated, the structure 1 having high density and excellent transmittance can be obtained. Furthermore, in the production method of the present embodiment, since the structure 1 can be obtained by pressurizing while heating at a temperature of 50°C to 300°C, precise temperature control is not required, and the production cost can be reduced.

As described above, the production method of the structure 1 of the present embodiment includes a step of pressurizing and heating a raw material that includes a complex fluoride. According to the production method of the structure 1 of the present embodiment, the structure 1 described above can be produced through a simple low-temperature process.

### Second embodiment

Next, a method for producing the structure 1 according to a second embodiment will be described. The structure 1 can also be produced by pressurizing and heating a raw material that includes first fluoride particles including an alkali metal, and second fluoride particles including a metal different from the alkali metal. By using such a pressure heating method, the fluoride particles are bonded to each other while forming a complex fluoride, and thus the structure 1 having a small porosity can be formed.

The first fluoride particles include an alkali metal. Examples of the alkali metal included in the first fluoride particles include lithium, sodium, potassium, rubidium, and cesium. Specifically, the first fluoride particles may include at least one metal fluoride selected from the group consisting of lithium fluoride, sodium fluoride, potassium fluoride, rubidium fluoride, and cesium fluoride.

The second fluoride particles include a metal element different from the alkali metal. The metal element different from the alkali metal is not particularly limited and may be at least one selected from the group consisting of an alkaline earth metal, aluminum, gallium, indium, zinc, and yttrium. The metal element different from the alkali metal may specifically include at least one metal selected from the group consisting of magnesium, calcium, strontium, barium, aluminum, gallium, indium, zinc, and yttrium. The second fluoride particles may include at least one metal fluoride selected from the group consisting of a magnesium fluoride (MgF₂), a calcium fluoride (CaF₂), a strontium fluoride (SrF₂), a barium fluoride (BaF₂), an aluminum fluoride (AlF₃), a gallium fluoride (GaF₃), an indium fluoride (InF₃), a yttrium fluoride (YF₃ₐ), and a zinc fluoride (ZnF₂).

Next, a solvent is added to the raw material including the first fluoride particles and the second fluoride particles. The solvent is not particularly limited, and for example, one capable of dissolving part of the first fluoride particles and the second fluoride particles when the raw material is pressurized and heated can be used. As such a solvent, for example, water can be used.

The raw material including the first fluoride particles and the second fluoride particles can be pressurized and heated as in the above embodiment to form the structure 1. The first fluoride particles and the second fluoride particles react in a solvent by being pressurized and heated to form the continuous phase 11 of a polycrystalline substance of a complex fluoride including an alkali metal. Thus, the structure 1 described above can be formed.

As described above, the production method of the structure 1 according to the present embodiment includes a step of pressurizing and heating a raw material that includes: a first fluoride including an alkali metal; a second fluoride including a metal different from the alkali metal; and water. In the production method of the structure 1 according to the present embodiment, the structure 1 described above can be produced through a simple low-temperature process.

### Third embodiment

Next, the production method of the structure 1 according to a third embodiment will be described. The structure 1 can also be produced by pressurizing and heating a raw material that includes: complex fluoride particles obtained using the production method of the structure 1 according to the first embodiment; and first and second fluoride particles described in the second embodiment.

Specifically, a raw material is prepared by mixing the complex fluoride particles with the first and second fluoride particles. The method for mixing these particles is not particularly limited and may be either dry mixing or wet mixing. When a solvent is added to the raw material, for example, water may be used as the solvent.

The raw material including the first fluoride particles and the second fluoride particles can be pressurized and heated as in the above embodiment to form the structure 1. The first fluoride particles and the second fluoride particles react in a solvent by being pressurized and heated, and bond with each other while forming a complex fluoride. The complex fluoride particles bond with each other while deforming. Thus, the structure 1 described above can be formed.

As described above, the production method of the structure 1 according to the present embodiment includes a step of pressurizing and heating a raw material that includes at least one of: a first fluoride including an alkali metal, a second fluoride including a metal different from the alkali metal, and water; or a complex fluoride. In the production method of the structure 1 according to the present embodiment, the structure 1 described above can be produced through a simple low-temperature process.

That is, as described in the first to third embodiments, the production method of the structure 1 includes a step of pressurizing and heating a raw material that includes at least one of: a first fluoride including an alkali metal, a second fluoride including a metal different from the alkali metal, and water; or a complex fluoride including at least one of a hydroxyl group or a water molecule, under conditions of a pressure of 10 to 600 MPa and a temperature of 50°C to 300°C. The structure 1 includes an inorganic substance in an amount of 85% by mass or more, the structure 1 includes a polycrystalline substance of a complex fluoride in an amount of 50% by mass or more, the porosity of the structure 1 is 30% or less, the median pore size of the structure 1 is 500 nm or less, and the thickness of the structure 1 is 10 µm or more. In the production method of the structure 1 according to these embodiments, the structure 1 described above can be produced through a simple low-temperature process.

### EXAMPLES

The present embodiment will be described in more detail below with reference to examples and comparative examples, but the embodiments are not limited to these examples.

### Example 1

First, sodium fluoride (NaF) powder (FUJIFILM Wako Pure Chemical Corporation, special grade reagent) and aluminum fluoride (AlF₃) powder (Kojundo Chemical Lab. Co., Ltd.) were prepared. Next, the sodium fluoride powder and the aluminum fluoride were mixed in a pot mill in such a manner that the molar ratio became 3: 1, and then, ionexchanged water was added in an amount of 20% by weight relative to the total amount of the powder, and was mixed using an agate mortar and an agate pestle to obtain a mixed powder.

Next, the mixed powder was put into a cylindrical molding die (ø12) having an internal space. The mixed powder was heated and pressurized under conditions of 180°C, 400 MPa, and 20 minutes. Thus, a test sample of this example having a cylindrical shape was obtained.

### Example 2

First, sodium hexafluoroaluminate (Na₃AlF₆) was synthesized. Specifically, 32 mmol of sodium fluoride (NaF) powder (FUJIFILM Wako Pure Chemical Corporation, special grade reagent), 4 mmol of aluminum chloride (AlCl₃·6H₂O) powder (FUJIFILM Wako Pure Chemical Corporation, special grade reagent), and 100 mL of H₂O were mixed and stirred at 25°C for 1 hour. The stirred liquid was subjected to suction filtration using a membrane filter having a pore size of 0.1 µm, and the residue was dried at -60 to -100 kPa at 80°C for 2 hours to obtain a single-phase Na₃AlF₆ powder.

Further, sodium fluoride (NaF) powder (FUJIFILM Wako Pure Chemical Corporation, special grade reagent) and aluminum fluoride (AlF₃) powder (Kojundo Chemical Lab. Co., Ltd.) were prepared. Next, the sodium fluoride powder, the aluminum fluoride powder, and the Na₃AlF₆ powder were mixed in such a manner that the molar ratio became 3:1:9, and ion exchange water was added in an amount of 20% by weight relative to the total amount of the powder, and was mixed using an agate mortar and an agate pestle.

Next, the mixed powder was put into a cylindrical molding die (ø12) having an internal space. The mixed powder was heated and pressurized under conditions of 180°C, 400 MPa, and 20 minutes. Thus, a test sample of this example having a cylindrical shape was obtained.

### Example 3

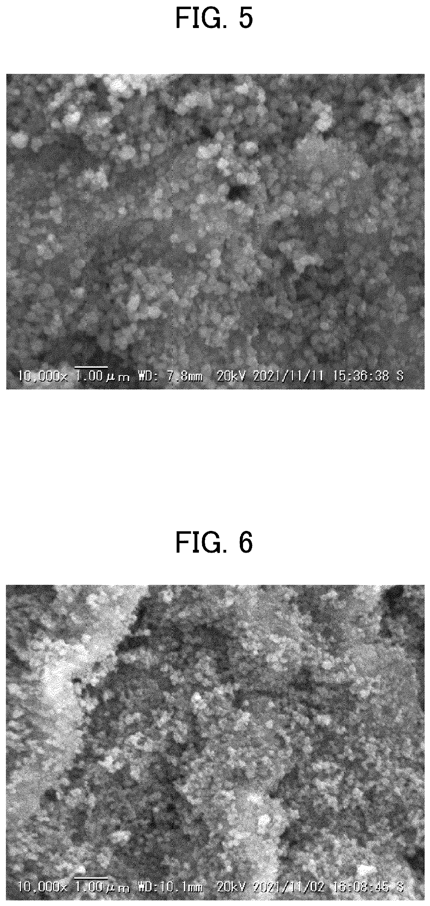

First, sodium hexafluoroaluminate (Na₃AlF₆) was synthesized. Specifically, 32 mmol of sodium fluoride (NaF) powder (FUJIFILM Wako Pure Chemical Corporation, special grade reagent), 4 mmol of the aluminum chloride (AlCl₃·6H₂O) powder (FUJIFILM Wako Pure Chemical Corporation, special grade reagent), and 100 mL of H₂O were mixed and stirred at 25°C for 1 hour. The stirred liquid was subjected to suction filtration using a membrane filter having a pore size of 0.1 µm, and the residue was dried at -60 to -100 kPa at 80°C for 2 hours to obtain a single-phase Na₃AlF₆ powder. A SEM image of the Na₃AlF₆ powder obtained through synthesis is illustrated in Fig. 5.

Next, the Na₃AlF₆ powder was put into a cylindrical molding die (ø12) having an internal space. The Na₃AlF₆ powder was heated and pressurized under conditions of 180°C, 400 MPa, and 20 minutes. Thus, a test sample of this example having a cylindrical shape was obtained.

### Example 4

First, K₂NaAlF₆ was synthesized. Specifically, 32 mmol of potassium fluoride (KF) powder (FUJIFILM Wako Pure Chemical Corporation, special grade reagent), 6 mmol of sodium chloride (NaCl) powder (FUJIFILM Wako Pure Chemical Corporation, special grade reagent), 2 mmol of aluminum chloride (AlCl₃ · 6H₂O), and 20 mL of H₂O were mixed and stirred at 25°C for 1 hour. The stirred liquid was subjected to suction filtration using a membrane filter having a pore size of 0.1 µm, and the residue was dried at -60 to -100 kPa at 80°C for 2 hours to obtain a single-phase K₂NaAlF₆ powder. A SEM image of the K₂NaAlF₆ powder obtained through synthesis is illustrated in Fig. 6.

Next, the K₂NaAlF₆ powder was put into a cylindrical molding die (ø12) having an internal space. The K₂NaAlF₆ powder was heated and pressurized under conditions of 180°C, 400 MPa, and 20 minutes. Thus, a test sample of this example having a cylindrical shape was obtained.

### Example 5

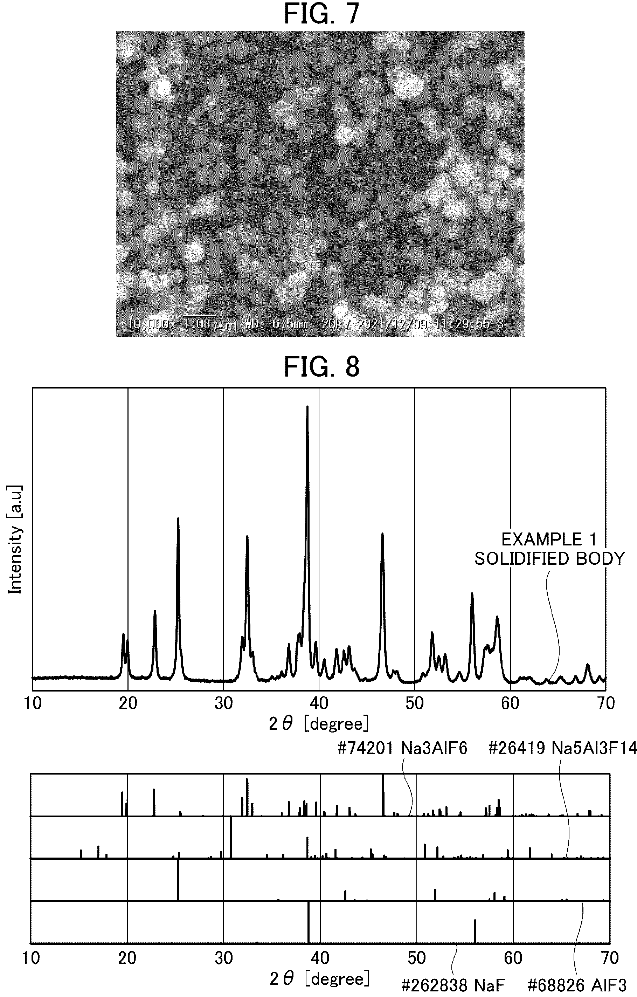

First, NaMgF₃ was synthesized. Specifically, 48 mmol of sodium fluoride (NaF) powder (FUJIFILM Wako Pure Chemical Corporation, special grade reagent), 12 mmol of magnesium chloride (MgCl₂·6H₂O) powder (FUJIFILM Wako Pure Chemical Corporation, special grade reagent), and 100 mL of H₂O were mixed and stirred at 80°C for 3 hours. The stirred liquid was subjected to suction filtration using a membrane filter having a pore size of 0.1 µm, and the residue was dried at -60 to -100 kPa at 80°C for 2 hours to obtain a single-phase NaMgF₃ powder. A SEM image of the NaMgF₃ powder obtained through synthesis is illustrated in Fig. 7.

Next, the NaMgF₃ powder was put into a cylindrical molding die (ø12) having an internal space. The NaMgF₃ powder was heated and pressurized under conditions of 180°C, 400 MPa, and 20 minutes. Thus, a test sample of this example having a cylindrical shape was obtained.

### Comparative example 1

The test sample obtained in example 1 was fired at 800°C for 2 hours to obtain a test sample of this example.

### Comparative example 2

The test sample obtained in example 3 was fired at 800°C for 2 hours to obtain a test sample of this example.

### Evaluation of test samples

Test samples produced as described above were subjected to crystal structure analysis, observation of pores, and measurement of porosity, pore size, and linear transmittance.

### Crystal structure analysis

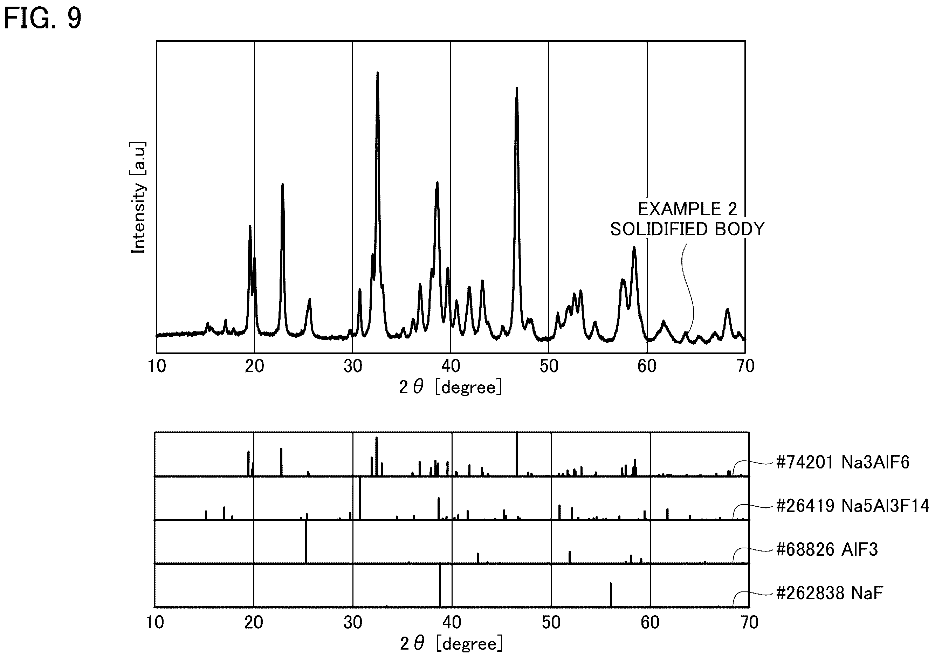

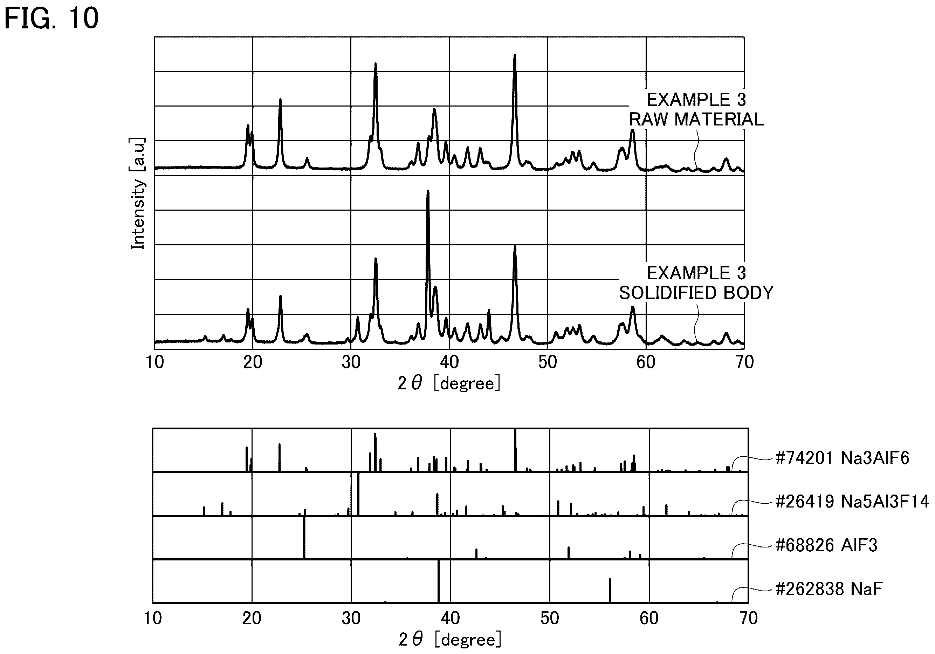

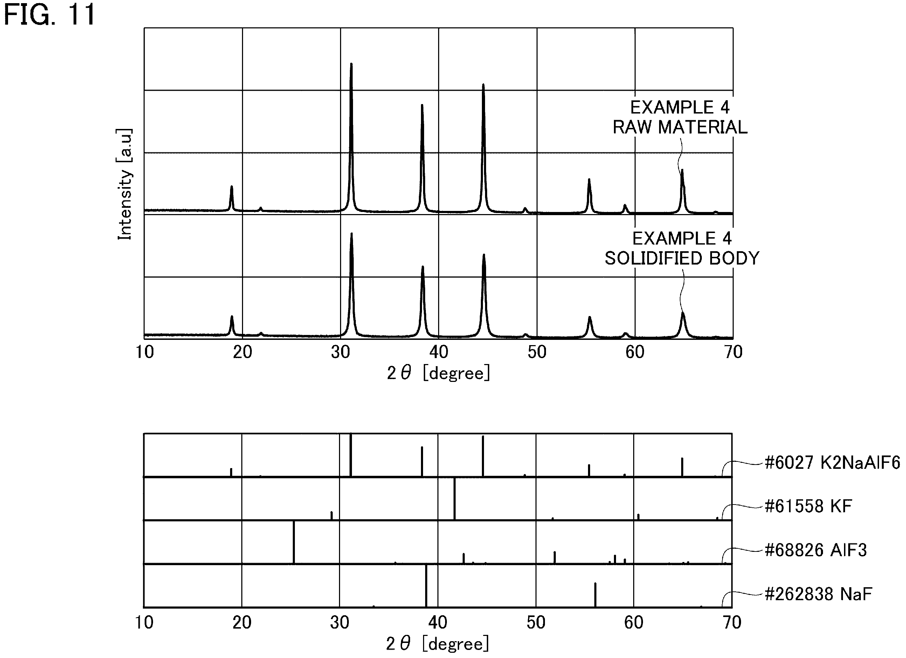

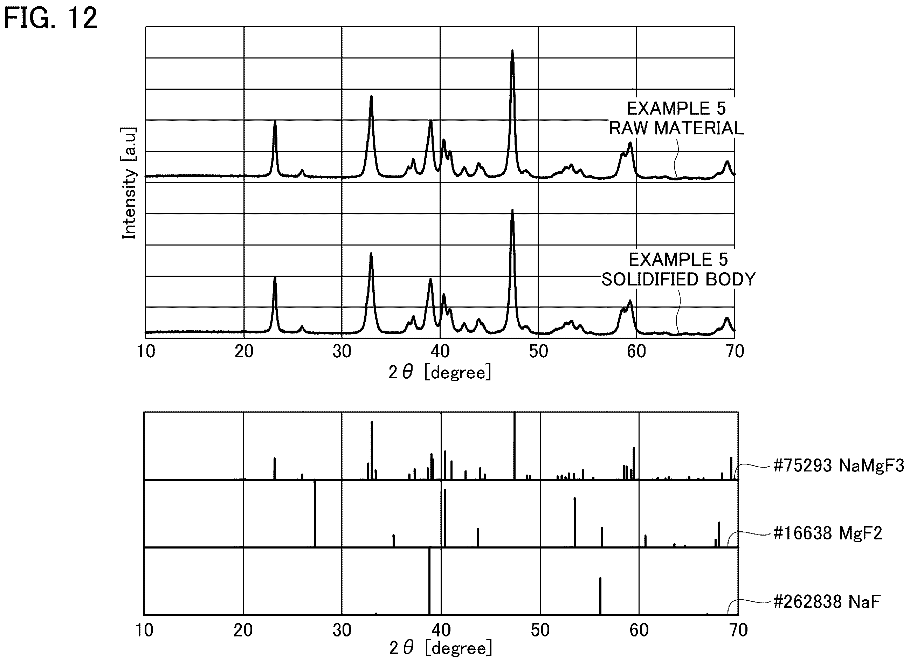

Next, powders obtained by pulverizing the test samples of examples 1 to 5 were measured using a powder X-ray diffraction (XRD) instrument, and XRD patterns were obtained. These results are shown in Figs. 8 to 12. The XRD patterns obtained were subjected to Rietveld analysis to obtain proportions of components. The results are shown in Tables 1 and 2. Note that in Tables 1 and 2, the unit of numerical values in the upper row is % by mass, and the unit of numerical values in parentheses in the lower row is % by volume.

### Observation of pores

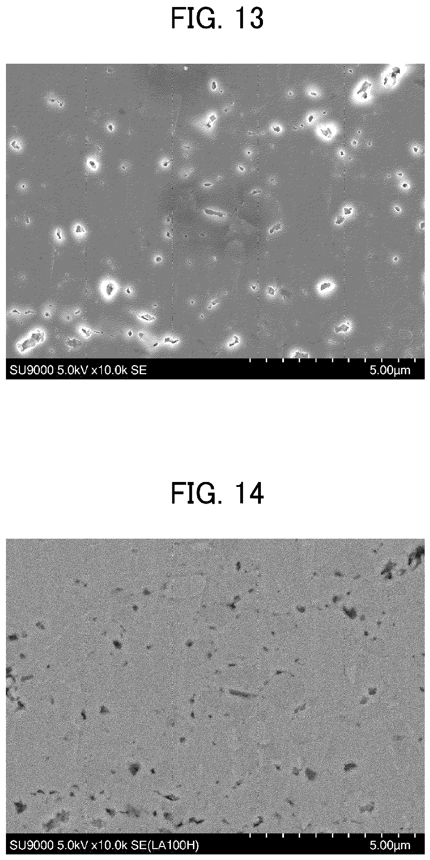

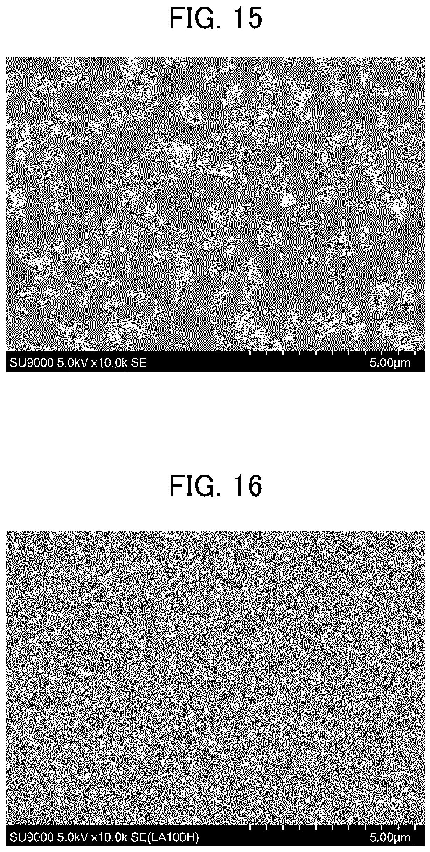

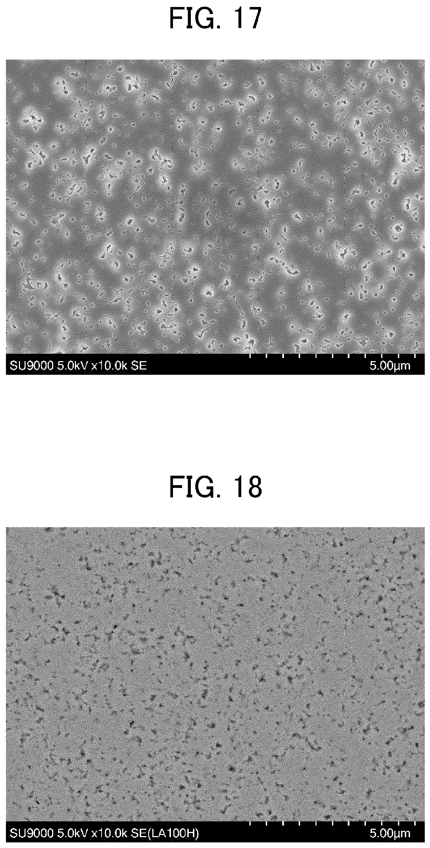

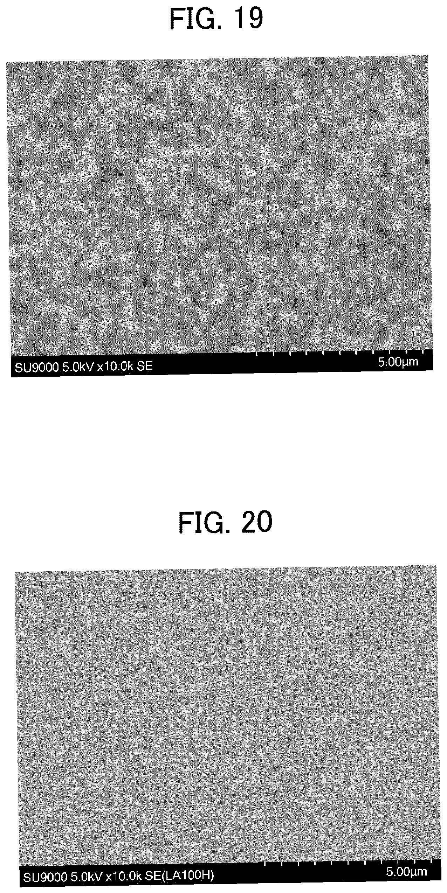

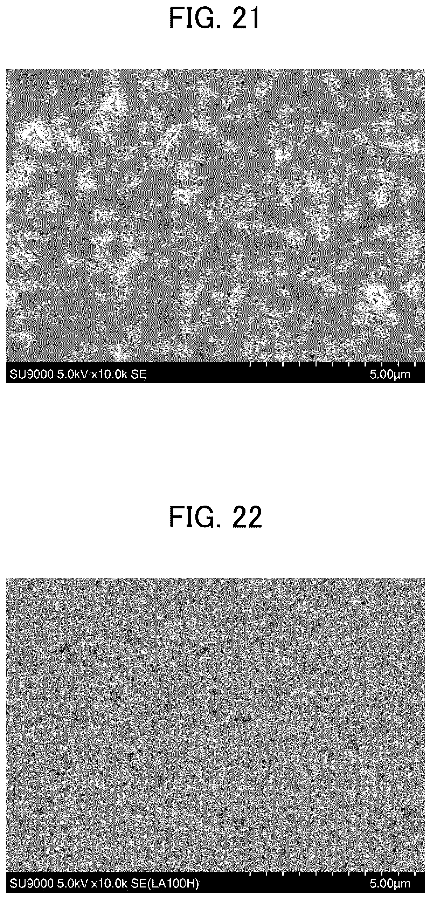

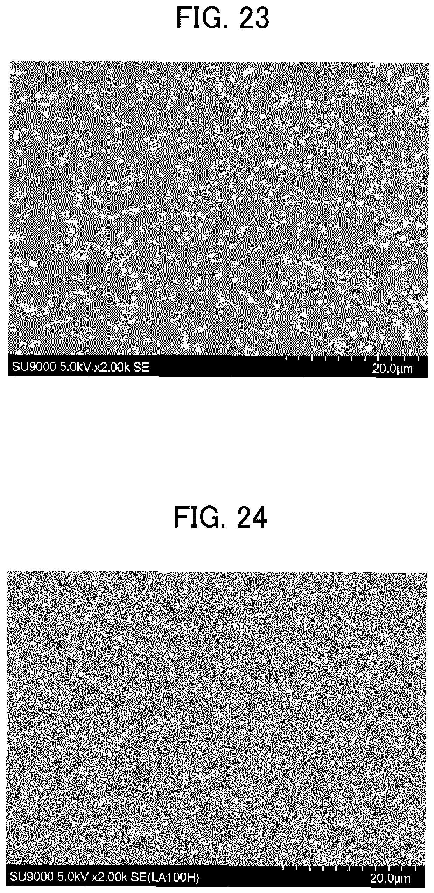

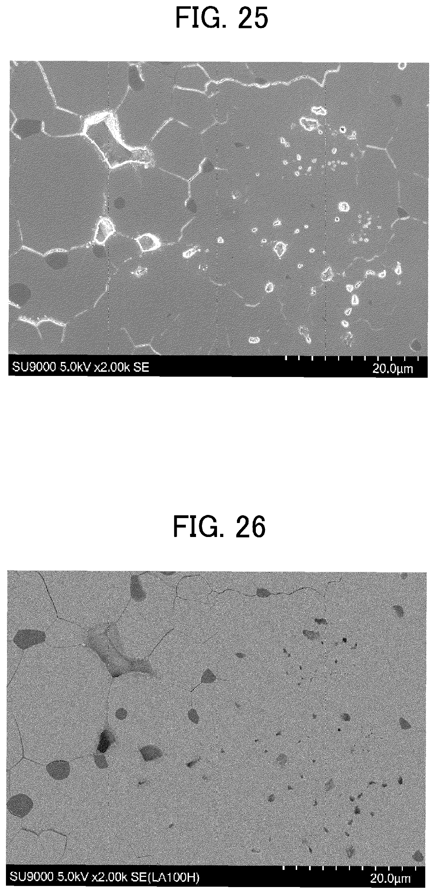

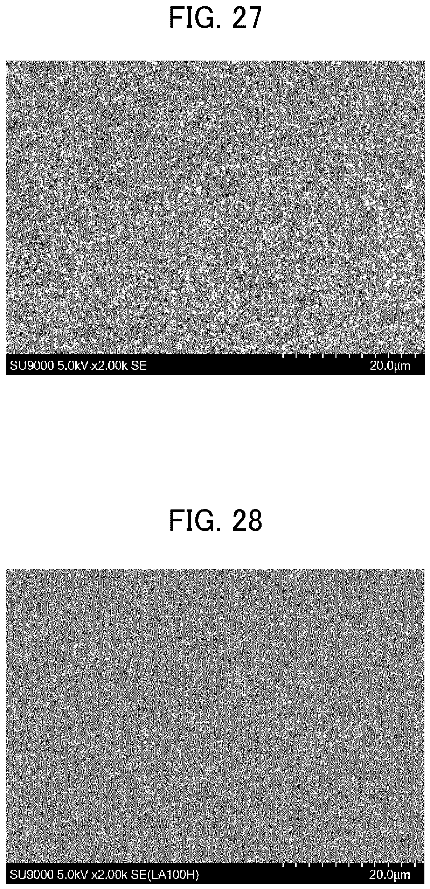

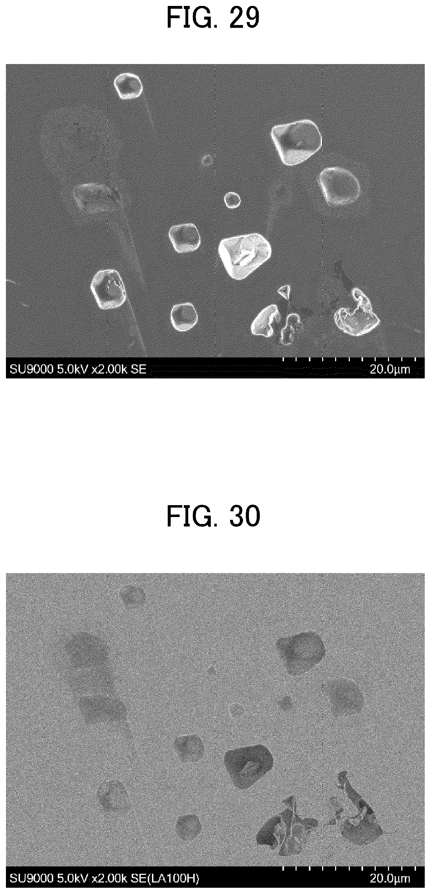

First, cross section polisher processing (CP processing) was applied to the cross section of each test sample. Next, a scanning electron microscope (SEM) was used to observe secondary electron images and reflected electron images of the cross section of each test sample at magnifications of 10,000 or 2,000 times. Figs. 13 to 30 illustrate secondary electron images and reflected electron images of examples 1 to 5 and comparative examples 1 and 2.

### Measurement of porosity and pore size

Next, the pore portion was clarified by binarizing each reflected electron image obtained as described above. Then, the area percentage of the pore portion was calculated from the binarized image to obtain porosity. Note that the porosity was obtained for pores having a pore size of 0 nm or more, 200 nm or more, 300 nm or more, and 500 nm or more. The results are shown in Table 3. The pore size was obtained for a case where the cumulative value in a pore size distribution on the area basis was 10% (d₁₀), 50% (d₅₀), and 90% (d₉₀). The calculation results are shown in Table 4.

### Linear transmittance

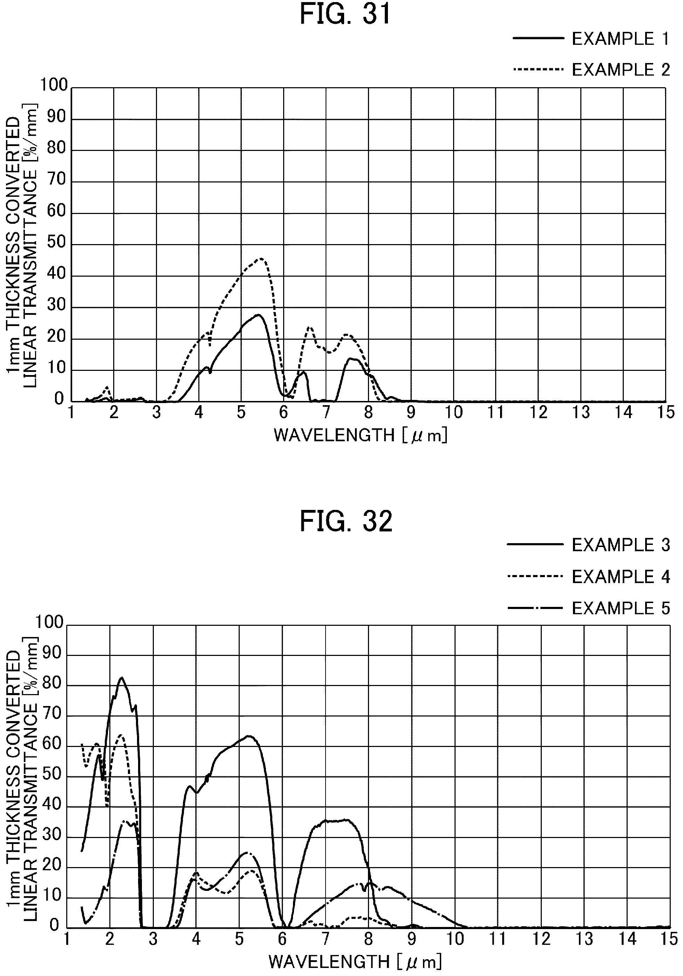

Test samples were measured using a transmission method with an FT-IR device, and infrared transmission spectra were obtained. These results are shown in Figs. 31 to 33. Note that the linear transmittance of the infrared transmittance spectra was converted according to the Lambert-Beer law to be a linear transmittance at a thickness of 1 mm.

**[Table 1]**

| | Raw material | Solidified body | | | |
|---|---|---|---|---|---|
| | | Na₃AlF₆ | Na₅Al₃F₁₄ | NaF | AlF₃ |
| Examle 1 | NaF | 84.9 (84.3) | - | 8.0 (8.4) | 7.1 (7.3) |
| | AlF₃ | | | | |
| Examle 2 | NaF | 96.1 (96.2) | 3.9 (3.8) | - | - |
| | AlF₃ | | | | |
| | Na₃AlF₆ | | | | |

**[Table 2]**

| | Raw material | Solidified body | |
|---|---|---|---|
| Examle 3 | Na₃AlF₆ | Na₃AlF₆ | Na₅Al₃F₁₄ |
| | 100 (100) | 99.3 (99.3) | 0.7 (0.7) |
| Examle 4 | K₂NaAlF₆ | K₂NaAlF₆ | - |
| | 100 (100) | 100 (100) | - |
| Examle 5 | NaMgF₃ | NaMgF₃ | - |
| | 100 (100) | 100 (100) | - |

**[Table 3]**

| | Raw material | Firing temperature | Porosity [%] | | | |
|---|---|---|---|---|---|---|
| | | | >0nm | >200nm | >300nm | >500nm |
| Examle 1 | NaF | - | 3.16 | 2.08 | 1.10 | 0.27 |
| | AlF₃ | | | | | |
| Examle 2 | NaF | - | 4.81 | 0.00 | 0.00 | 0.00 |
| | AlF₃ | | | | | |
| | Na₃AlF₆ | | | | | |
| Examle 3 | Na₃AlF₆ | - | 6.99 | 0.30 | 0.00 | 0.00 |
| Examle 4 | K₂NaAlF₆ | - | 8.48 | 0.00 | 0.00 | 0.00 |
| Examle 5 | NaMgF₃ | - | 5.03 | 1.38 | 0.41 | 0.00 |
| Comparative example 1 | NaF | 800°C | 3.84 | 3.80 | 3.76 | 3.59 |
| | AlF₃ | | | | | |
| Comparative example 2 | Na₃AlF₆ | 800°C | 6.36 | 6.28 | 6.21 | 6.11 |

**[Table 4]**

| | Raw material | Firing temperature | Pore size | | |
|---|---|---|---|---|---|
| | | | d₁₀ [nm] | d₅₀ [nm] | d₉₀ [nm] |
| Example 1 | NaF | - | 108 | 263 | 447 |
| | AlF₃ | | | | |
| Example 2 | NaF | - | 57 | 86 | 121 |
| | AlF₃ | | | | |
| | Na₃AlF₆ | | | | |
| Example 3 | Na₃AlF₆ | - | 70 | 121 | 181 |
| Example 4 | K₂NaAlF₆ | - | 56 | 77 | 107 |
| Example 5 | NaMgF₃ | - | 66 | 134 | 287 |
| Comparative example 1 | NaF | 800°C | 631 | 2697 | 3638 |
| | AlF₃ | | | | |
| Comparative example 2 | Na₃AlF₆ | 800°C | 2064 | 4681 | 6571 |

As illustrated in Table 1, the test sample of example 1 included NaF and AlF₃, which were the same components as the raw material, and Na₃AlF₆ produced through a hydrothermal reaction. Since particulate NaF and AlF₃ were used as the raw material in example 1, there was a possibility that a center area of particles remained unreacted. In contrast, it was found that the test sample of example 2 included a small amount of Na₅Al₃F₁₄ in addition to Na₃AlF₆.

As illustrated in Table 2, it was found that the test sample of example 3 included a small amount of Na₅Al₃F₁₄ in addition to Na₃AlF₆. The sample of example 4 included K₂NaAlF₆ in an amount of 100% by mass, which was the same as the raw material. The sample of example 5 also included NaMgF₃ in an amount of 100% by mass, which was the same as the raw material.

As illustrated in Table 3, the porosity of pores over 500 nm was 0.27% in example 1 and 0.00% in examples 2 to 5. In contrast, the porosity of pores over 500 nm was 3.59% in comparative example 1 and 6.11% in comparative example 2. As illustrated in Table 4, the median value (d₅₀) of the pore size of examples 1 to 5 was very small as compared with comparative examples 1 and 2.

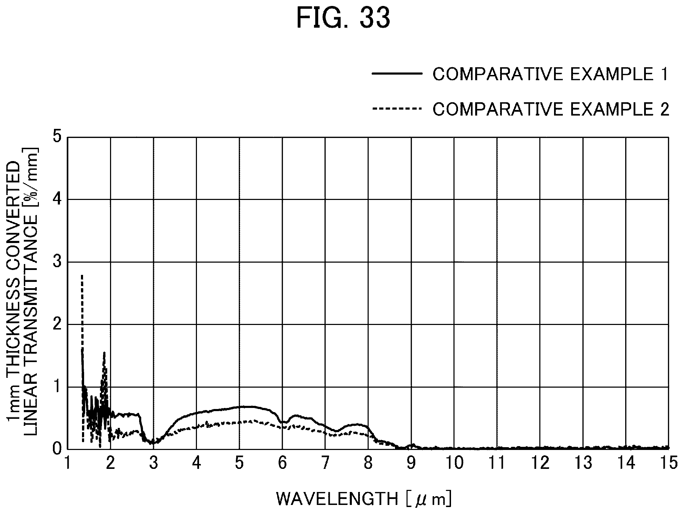

As illustrated in Fig. 31, the linear transmittance continuously exceeded 10% within the range from 4.30 to 5.80 µm (wavelength bandwidth 1.5 µm) in example 1, and within the range from 3.62 to 5.96 µm (wavelength bandwidth 2.34 µm) in example 2. As illustrated in Fig. 32, the linear transmittance continuously exceeded 10% within the range from 3.50 to 5.88 µm (wavelength bandwidth 2.38 µm) in example 3, within the range from 3.74 to 5.62 µm (wavelength bandwidth 1.88 µm) in example 4, and within the range from 3.78 to 5.62 µm (wavelength bandwidth 1.84 µm) in example 5. In contrast, as illustrated in Fig. 33, the linear transmittance of comparative examples 1 and 2 was less than 1% in the entire range of the wavelength 3 µm or more and 10 µm or less.

From these results, it was found that the linear transmittance of the test samples of examples 1 to 5 was higher than that of the test samples of comparative examples 1 and 2. This is thought to be because, in the test samples of examples 1 to 5, the median pore size of the structure was 500 nm or less, and there was less light scattering due to coarse pores.

In addition, the infrared transmittance of the test sample of example 2 was higher than that of the test sample of example 1. This may have been partly due to the fact that the test sample of example 2 had a small proportion of the remaining unreacted raw material.

Next, test samples formed through pressurization and heating, and test samples formed through pressurization and firing were produced as follows.

### Example 6

A test sample of this example having a cylindrical shape was obtained through the same process as in example 3.

### Example 7

A test sample of this example having a cylindrical shape was obtained through the same process as in example 1.

### Comparative example 3

The Na₃AlF₆ powder synthesized in example 6 was put into a molding die. Next, the Na₃AlF₆ powder was pressurized under conditions of room temperature (25°C) and 50 MPa. The thus obtained cylindrical compact was fired at 800°C for 2 hours.

### Comparative example 4

The mixed powder prepared in example 7 was put into a molding die. Next, the mixed powder was pressurized under conditions of room temperature (25°C) and 50 MPa. The thus obtained cylindrical compact was fired at 800°C for 2 hours.

### Structure observation

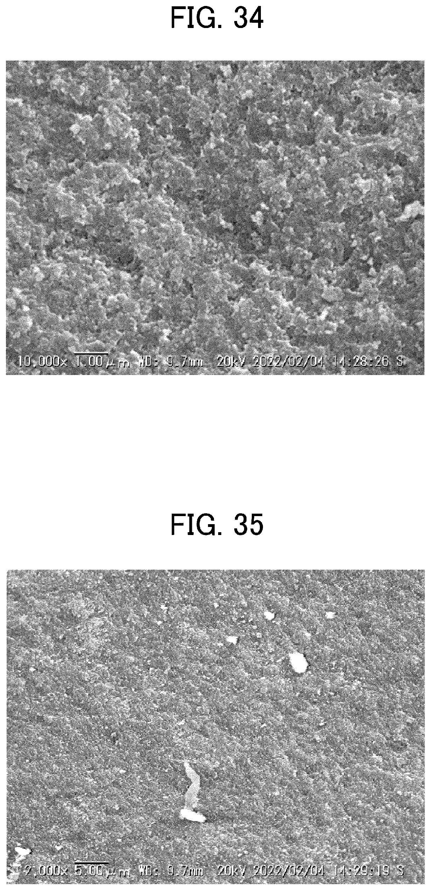

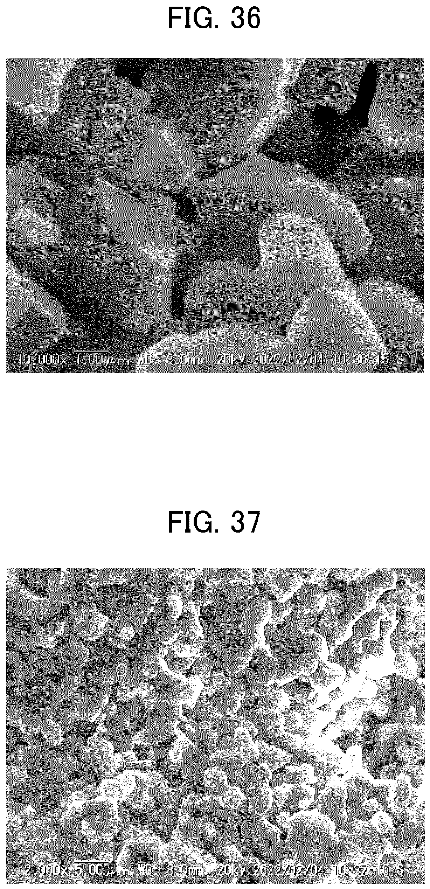

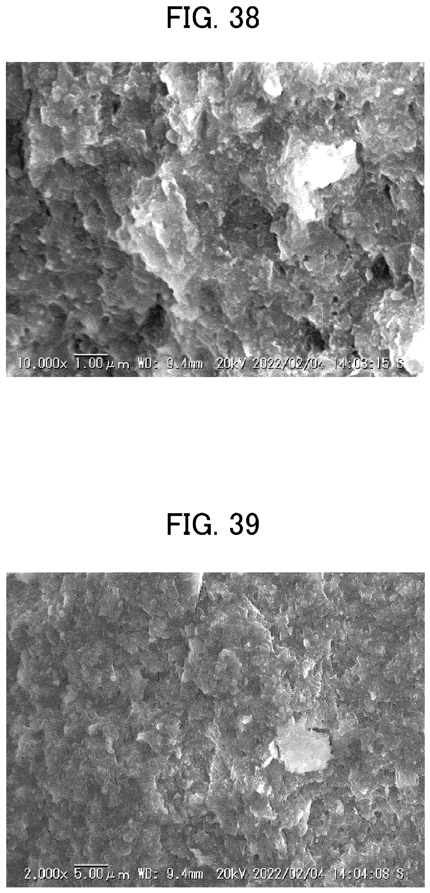

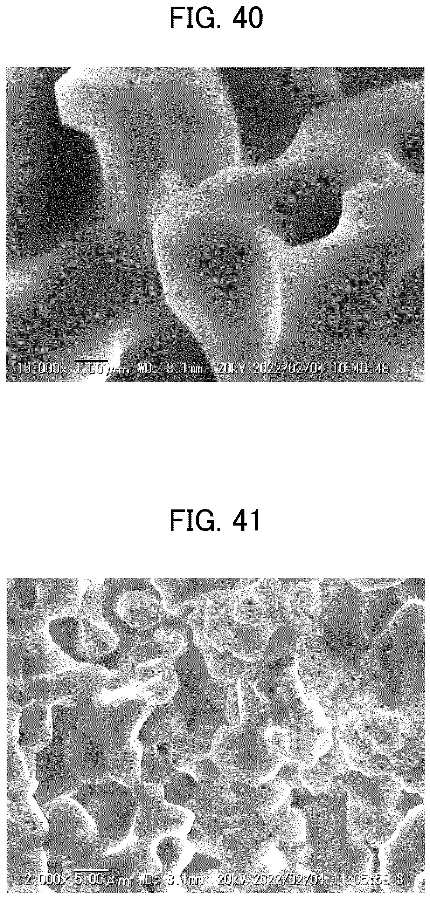

Cut surfaces of the test samples according to examples 6 and 7, and comparative examples 3 and 4 were observed using a scanning electron microscope (SEM) at a magnification of 10,000 times or 2,000 times. These secondary electron images are illustrated in Figs. 34 to 41. Note that the observation surfaces of the test samples were sputtered with gold.

Pores of the test sample of comparative example 3 were larger than those of the test sample of example 6. Similarly, pores of the test sample of comparative example 4 were larger than those of the test sample of example 7. From these results, it is evident that the test samples formed through pressurization and heating were denser than the test samples formed through pressurization and firing.

Next, in order to confirm the effect of heat treatment on Na₃AlF₆ powder, structures according to the following examples were produced.

### Example 8

A cylindrical test sample of this example was obtained through the same process as in example 3.

### Example 9

First, sodium hexafluoroaluminate (Na₃AlF₆) was synthesized. Specifically, 24 mmol of sodium fluoride (NaF) powder (FUJIFILM Wako Pure Chemical Corporation, special grade reagent), 3 mmol of aluminum chloride (AlCl₃·6H₂O) powder (FUJIFILM Wako Pure Chemical Corporation, special grade reagent), and 100 mL of H₂O were mixed and stirred at 28°C for 20 hours. The stirred liquid was subjected to suction filtration using a membrane filter having a pore size of 0.1 µm, and the residue was dried at -60 to -100 kPa at 80°C for 2 hours. The obtained powder was crushed in a mortar and was subjected to heat treatment at 300°C for 2 hours in air to obtain Na₃AlF₆ powder.

Water in an amount of 10% by mass relative to the Na₃AlF₆ powder subjected to heat treatment was added to the Na₃AlF₆ powder. Next, the hydrated Na₃AlF₆ powder was put into a cylindrical molding die (ø12) having an internal space. The hydrated Na₃AlF₆ powder was heated and pressurized under conditions of 180°C, 400 MPa, and 20 minutes. Thus, a test sample of this example having a cylindrical shape was obtained.

### Example 10

A test sample was produced in the same manner as in example 9 except that the heat treatment temperature was set to 400°C instead of 300°C.

### Example 11

A test sample was produced in the same manner as in example 9 except that the heat treatment temperature was set to 500°C instead of 300°C.

### Evaluation

### SEM image of Na₃AlF₆ powder

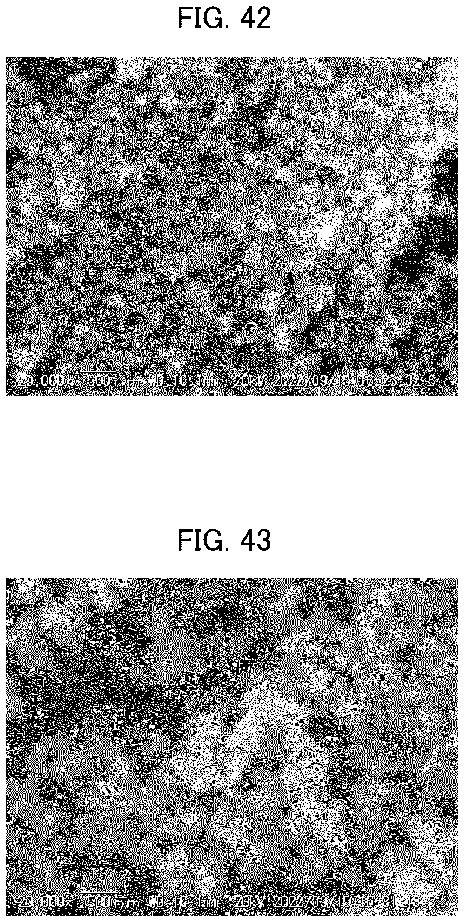

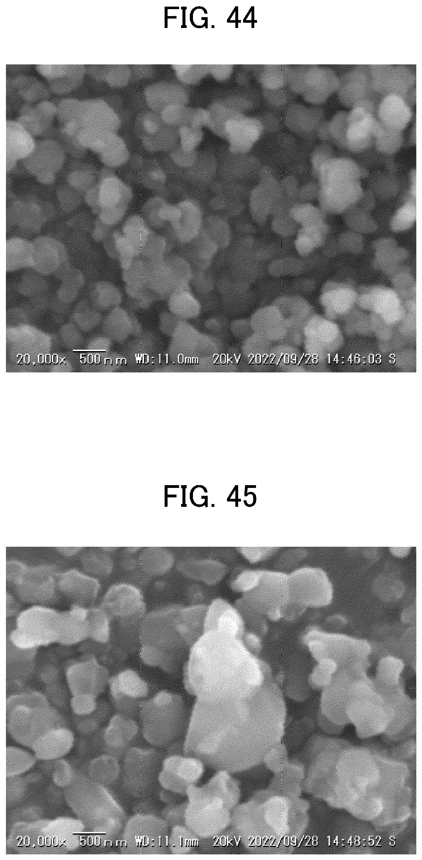

The Na₃AlF₆ powders obtained through the synthesis of examples 8 to 11 after 2 hours heat treatment were observed using a scanning electron microscope (SEM). These SEM images are illustrated in Figs. 42 to 45.

### Crystal structure analysis

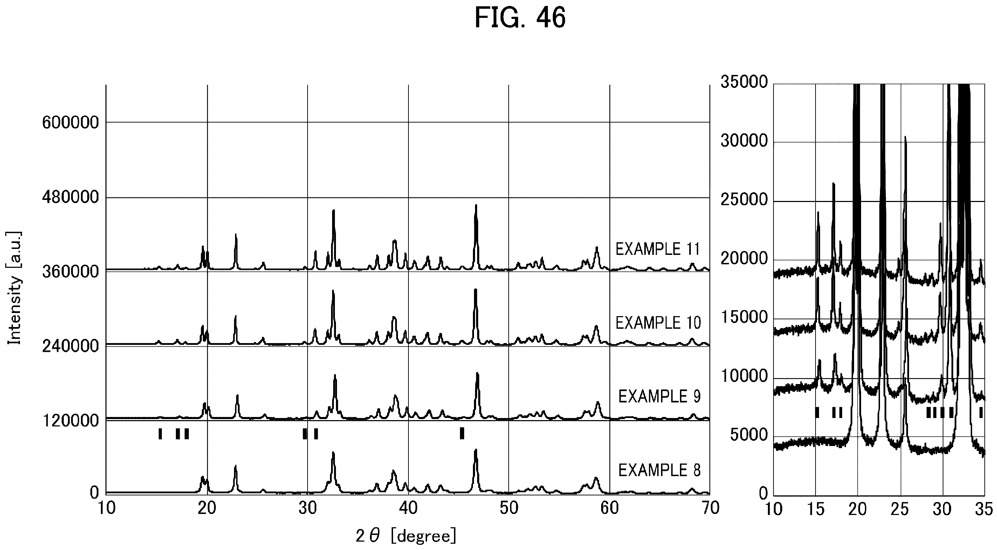

A powder X-ray diffraction (XRD) instrument was used to obtain XRD patterns of Na₃AlF₆ powders obtained in examples after 2 hours heat treatment. These results are illustrated in Fig. 46.

### Observation of pores

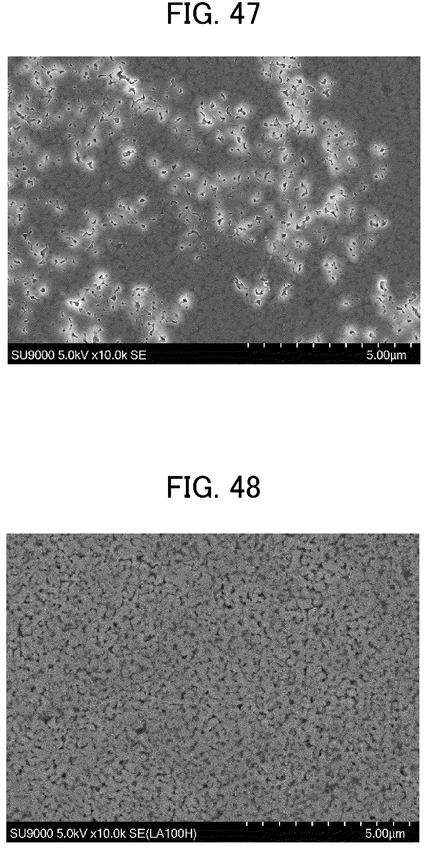

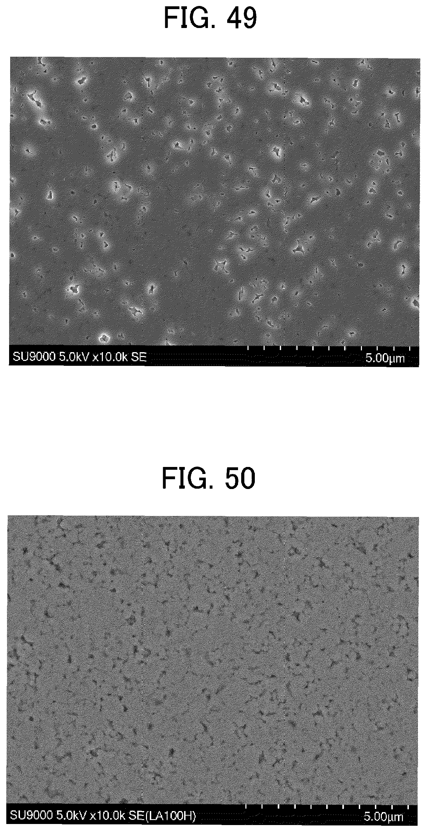

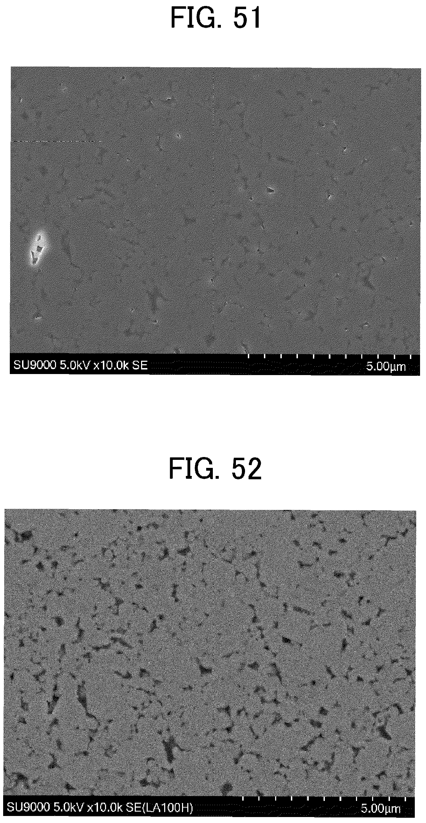

As above, a scanning electron microscope (SEM) was used to observe a secondary electron image and a reflected electron image at a magnification of 10,000 times on the cross section of each test sample. Figs. 47 and 48 illustrate a secondary electron image and a reflected electron image of example 9. Figs. 49 and 50 illustrate a secondary electron image and a reflected electron image of example 10. Figs. 51 and 52 illustrate a secondary electron image and a reflected electron image of example 11.

### Measurement of porosity and pore size

As above, the porosity was measured from the reflected electron images obtained. Note that the porosity was determined for pores having a pore size of 5 nm or more. The results are shown in Table 5. The pore size was obtained for cases where the cumulative value in a pore size distribution on the area basis was 10% (d₁₀), 50% (d₅₀), and 90% (d₉₀). The calculation results are shown in Table 5.

### Relative density

First, the volume and mass of each structure were measured, and the apparent density of the structure was calculated. Next, the relative density of the structure was calculated by dividing the apparent density of the test sample by the density of cryolite (2.98 g/cm³).

### Linear transmittance

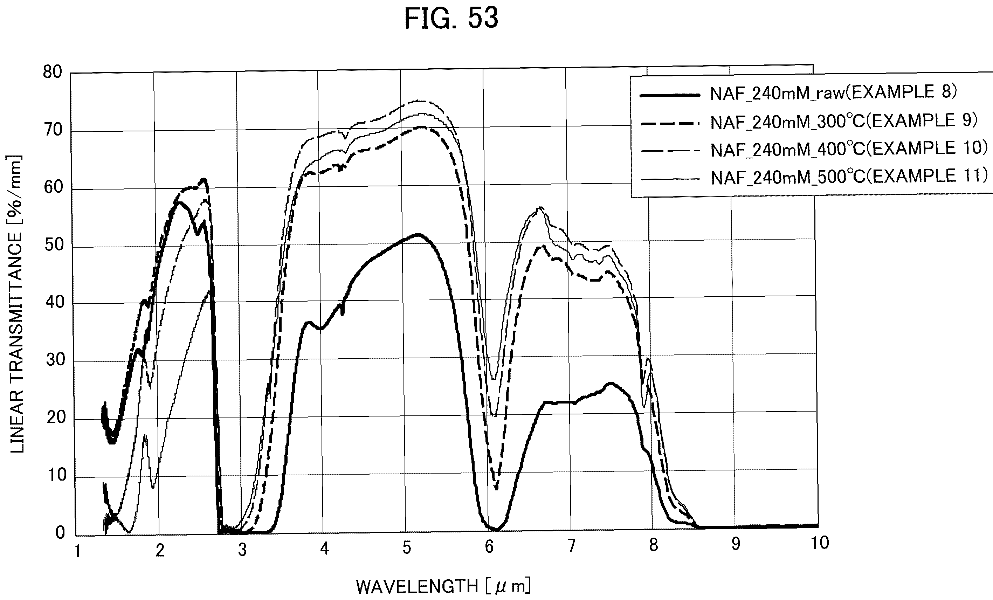

Each test sample was measured using a transmission method with an FT-IR device, and an infrared transmission spectrum was obtained. These results are shown in Figures 53 to 55. The linear transmittance of the infrared transmittance spectrum was converted according to the Lambert-Beer law to be a linear transmittance at a thickness of 1 mm.

### Weight loss percentage

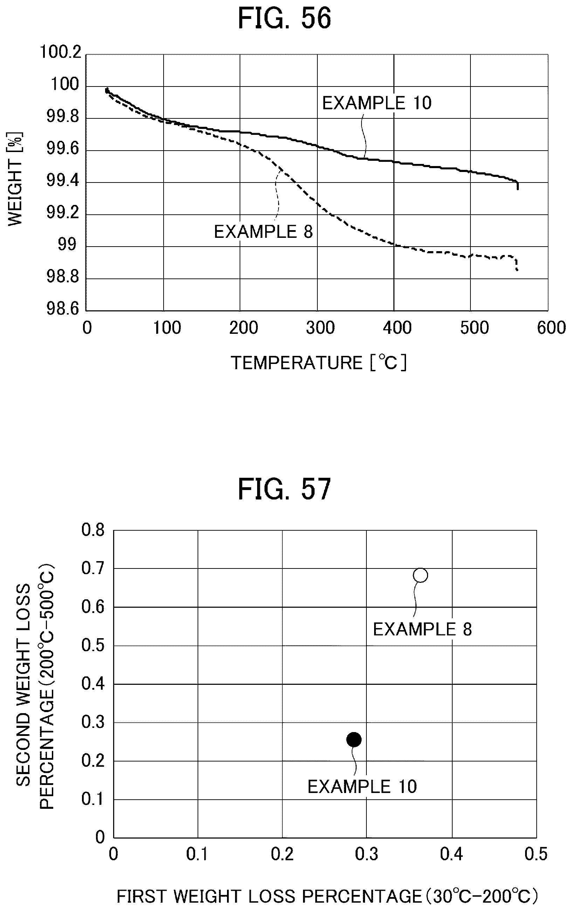

The weight loss percentage of each structure was measured using a thermogravimetry (TG) device. Specifically, a test sample of 15 to 20 mg was placed in an aluminum container and heated from 30°C to 560°C at 10°C/min with dry air flowing in at 20 mL/min. A first weight loss percentage from 30°C to 200°C, and a second weight loss percentage from 200°C to 500°C were calculated. Specifically, the first weight loss percentage from 30°C to 200°C was calculated by dividing the weight of a sample at 200°C by the weight of the sample at 30°C. Similarly, the second weight loss percentage from 200°C to 500°C was calculated by dividing the weight of the sample at 500°C by the weight of the sample at 200°C. These results are shown in Table 6, Fig. 56, and Fig. 57.

**Table 5**

| | Raw material | Drying temperature | Heat treatment temperature | Pore size | | | Porosity [%] |
|---|---|---|---|---|---|---|---|
| | | | | d₁₀ [nm] | d₅₀ [nm] | d₉₀ [nm] | |
| Example 8 | Na₃AlF₆ | 80°C | - | 70 | 121 | 181 | 6.99 |
| Example 9 | Na₃AlF₆ | 80°C | 300°C | 105 | 201 | 359 | 21.89 |
| Example 10 | Na₃AlF₆ | 80°C | 400°C | 94 | 187 | 284 | 14.35 |
| Example 11 | Na₃AlF₆ | 80°C | 500°C | 132 | 272 | 495 | 12.67 |

**Table 6**

| | First weight loss percentage 30∼200°C | Second weight loss percentage 200∼500°C | Transmittance ( *λ* = 4*µ* m) |
|---|---|---|---|
| Example 8 | 0.364% | 0.682% | 35% |
| Example 10 | 0.282% | 0.249% | 69% |

As illustrated in Fig. 46, when the heat treatment temperature was within a range from 300°C to 500°C, a different phase (Na₅Al₃F₁₄) was present. However, in all examples, the main phase was Na₃AlF₆, and it was confirmed that the structure included a polycrystalline substance of Na₃AlF₆ in an amount of at least 95% by mass.

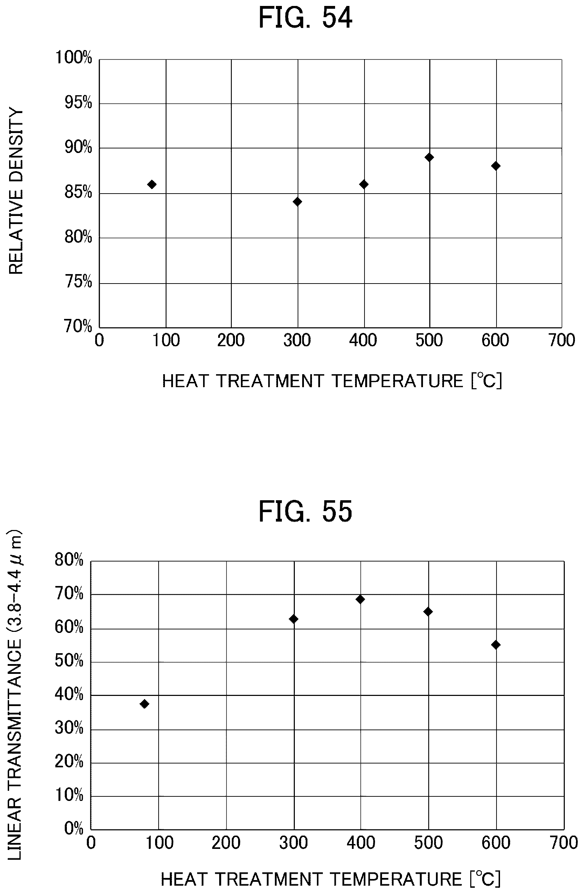

As illustrated in Table 5, the median pore size (d50) of examples 8 to 11 was 500 nm or less, which was very small. The porosity of examples 8 to 11 was 30% or less. As illustrated in Fig. 54, a relative density of each structure was 70% or more, and it was confirmed that all structures were dense. From these results, it was confirmed that the structures were dense.

As illustrated in Fig. 53, an average value of the linear transmittance per 1 mm thickness of the structure 1 of examples 9 to 11 at a wavelength of 3.8 to 5.7 µm (wavelength bandwidth of 1.9 µm) exceeded 60%. Further, as illustrated in Table 6, Fig. 53, and Fig. 55, it was found that the linear transmittance of the test samples of examples 9 to 11 at a wavelength of around 4 µm was higher than that of the test sample of example 8, and the linear transmittance was maximum when the heat treatment temperature was 400°C. As illustrated in Table 6, Fig. 56, and Fig. 57, the second weight loss percentage of example 10 was 0.5% or less, which was less than half of that of example 8. From the results of Figs. 53, 56 and 57, it is thought that the amount of hydroxyl groups and water molecules in each structure was reduced through the heat treatment, infrared absorption and scattering due to hydroxyl groups and water molecules were reduced, and the transmittance of the structure was improved.

### Appendix

With descriptions of the above embodiments, the following techniques are disclosed.

### Technique 1

A structure including: a base material that includes a continuous phase of a polycrystalline substance of a complex fluoride including an alkali metal, wherein the structure includes an inorganic substance in an amount of 85% by mass or more, the structure includes the polycrystalline substance of the complex fluoride in an amount of 50% by mass or more, the structure has a porosity of 30% or less, the structure has a median pore size of 500 nm or less, and the structure has a thickness of 10 µm or more.

With this configuration, the structure is unlikely to dissolve in water, and the structure can be produced through a simple low-temperature process. Therefore, the structure is suitable for applications such as infrared transmission windows for gas sensors and flame detection sensors.

### Technique 2

The structure according to technique 1, wherein the complex fluoride includes: as main components, fluorine; the alkali metal; and at least one additional metal selected from the group consisting of an alkaline earth metal, aluminum, gallium, indium, zinc, and yttrium. Since the complex fluoride has low refractive index anisotropy, the transmission of infrared light can be improved. Therefore, the structure is suitable for applications such as infrared transmission windows for gas sensors and flame detection sensors.

### Technique 3

The structure according to technique 1 or 2, wherein the complex fluoride includes, as main components, fluorine, the alkali metal, and aluminum. Since the complex fluoride has low refractive index anisotropy, the transmission of infrared light can be improved. Therefore, the structure is suitable for applications such as infrared transmission windows for gas sensors and flame detection sensors.

### Technique 4

The structure according to any one of techniques 1 to 3, wherein a wavelength bandwidth where a linear transmittance continuously exceeds 10% in a target wavelength band of 3 µm or more and 10 µm or less is 0.1 µm or more. This configuration increases the infrared transmission. Therefore, the structure is suitable for applications such as infrared transmission windows for gas sensors and flame detection sensors.

### Technique 5

The structure according to any one of techniques 1 to 4, wherein a wavelength bandwidth where a linear transmittance continuously exceeds 50% in a target wavelength band of 3 µm or more, and 5 µm or less, is 0.1 µm or more. This configuration further increases the infrared transmission. Therefore, the structure is more suitable for applications such as infrared transmission windows for gas sensors and flame detection sensors.

### Technique 6

The structure according to any one of techniques 1 to 5, wherein a weight loss percentage when the structure is heated from 200°C to 500°C is 0.5% or less. With this configuration, the amount of hydroxyl groups and water molecules in the structure can be reduced, and infrared absorption and scattering due to the hydroxyl groups and water molecules can be reduced. Therefore, infrared transmission can be further increased.

### Technique 7

The structure according to any one of techniques 1 to 6, wherein the structure is an infrared transmission filter. With this configuration, it is possible to provide an infrared detection device, a light emitting device, and the like, capable of controlling diffuse reflection of infrared light due to pores.

### Technique 8

An infrared detection device including the structure according to any one of techniques 1 to 7. With this configuration, it is possible to provide an infrared detection device capable of reducing diffuse reflection of infrared light due to pores in the structure.

### Technique 9

A light emitting device including the structure according to any one of techniques 1 to 7. With this configuration, it is possible to provide a light emitting device capable of reducing diffuse reflection of infrared light due to pores in the structure.

### Technique 10

A method for producing a structure including: pressurizing and heating a raw material that includes at least one of: a first fluoride including an alkali metal, a second fluoride including a metal different from the alkali metal, and water; or a complex fluoride including at least one of a hydroxyl group or a water molecule; under conditions that a pressure is within a range from 10 to 600 MPa, and a temperature is within a range from 50°C to 300°C, wherein the structure includes an inorganic substance in an amount of 85% by mass or more, the structure includes the polycrystalline substance of the complex fluoride in an amount of 50% by mass or more, the structure has a porosity of 30% or less, the structure has a median pore size of 500 nm or less, and the structure has a thickness of 10 µm or more. Thus, the structure can be produced through a simple low-temperature process.

The entire contents of Japanese Patent Application No. 2022-114679 (filed July 19, 2022) are incorporated herein by reference.

Although the present embodiment has been described above, the present embodiment is not limited these descriptions, and various modifications are possible within the scope of the gist of the present embodiment.

### INDUSTRIAL APPLICABILITY

The present disclosure provides a structure suitable for applications such as infrared transmission windows for gas sensors and flame detection sensors, and provides an infrared detection device and a light emitting device each using the structure. The present disclosure provides a method for producing the above structure, which can be produced through a simple low-temperature process.

### REFERENCE SIGNS LIST

- 1: Structure
- 10: Base material
- 11: Continuous phase
- 100: Infrared detection device
- 200: Light emitting device

## Claims

1. A structure, comprising:
a base material that includes a continuous phase of a polycrystalline substance of a complex fluoride including an alkali metal, wherein
the structure includes an inorganic substance in an amount of 85% by mass or more,
the structure includes the polycrystalline substance of the complex fluoride in an amount of 50% by mass or more,
the structure has a porosity of 30% or less,
the structure has a median pore size of 500 nm or less, and
the structure has a thickness of 10 µm or more.

2. The structure according to claim 1, wherein the complex fluoride includes: as main components, fluorine; the alkali metal; and at least one additional metal selected from the group consisting of an alkaline earth metal, aluminum, gallium, indium, zinc, and yttrium.

3. The structure according to claim 1 or 2, wherein the complex fluoride includes, as main components, fluorine, the alkali metal, and aluminum.

4. The structure according to any one of claims 1 to 3, wherein a wavelength bandwidth where a linear transmittance continuously exceeds 10% in a target wavelength band of 3 µm or more, and 10 µm or less, is 0.1 µm or more.

5. The structure according to any one of claims 1 to 4, wherein a wavelength bandwidth where a linear transmittance continuously exceeds 50% in a target wavelength band of 3 µm or more, and 5 µm or less, is 0.1 µm or more.

6. The structure according to any one of claims 1 to 5, wherein a weight loss percentage when the structure is heated from 200°C to 500°C is 0.5% or less.

7. The structure according to any one of claims 1 to 6, wherein the structure is an infrared transmission filter.

8. An infrared detection device comprising the structure according to any one of claims 1 to 7.

9. A light emitting device comprising the structure according to any one of claims 1 to 7.

10. A method for producing a structure, comprising: pressurizing and heating a raw material that includes at least one of: a first fluoride including an alkali metal, a second fluoride including a metal different from the alkali metal, and water; or a complex fluoride including at least one of a hydroxyl group or a water molecule; under conditions that a pressure is within a range from 10 to 600 MPa, and a temperature is within a range from 50°C to 300°C, wherein
the structure includes an inorganic substance in an amount of 85% by mass or more,
the structure includes the polycrystalline substance of the complex fluoride in an amount of 50% by mass or more,
the structure has a porosity of 30% or less,
the structure has a median pore size of 500 nm or less, and
the structure has a thickness of 10 µm or more.
